# EUROPÄISCHE PATENTSCHRIFT

(11) **EP 0 527 992 B1**
(45) Veröffentlichungstag und Bekanntmachung des Hinweises auf die Patenterteilung: **18.02.1998**
(21) Anmeldenummer: 92905569.7
(22) Anmeldetag: 06.03.1992
(51) Int. Cl.: C08J 7/04, C08J 7/16, B05D 7/02, B01D 71/00

(54) **VERFAHREN ZUR OBERFLÄCHENMODIFIZIERUNG VON ALS MIKROPORÖSE MEMBRAN AUSGEBILDETEN FORMKÖRPERN, DAMIT HERGESTELLTE FORMKÖRPER UND DEREN VERWENDUNG FÜR DIE ADSORPTIVE STOFFTRENNUNG**
PROCESS FOR MODIFYING THE SURFACE OF MOULDINGS IN THE FORM OF MICROPOROUS MEMBRANES, MOULDINGS SO PRODUCED AND THEIR USE FOR SEPARATING SUBSTANCES BY ADSORPTION
PROCEDE DE MODIFICATION DE LA SURFACE DES MEMBRANES MICROPOREUSES, OBJETS MOULES AINSI OBTENUS ET LEUR UTILISATION POUR LA SEPARATION DE SUBSTANCES PAR ADSORPTION

(30) Priorität: 06.03.1991 DE 4107171
(43) Veröffentlichungstag der Anmeldung: 24.02.1993
(73) Patentinhaber: SARTORIUS AG, 37075 Göttingen (DE)
(72) Erfinder: DEMMER, Wolfgang, D-3400 Göttingen (DE); HÖRL, Hans-Heinrich, D-3406 Bovenden (DE); NUSSBAUMER, Dietmar, D-3400 Göttingen (DE); WEISS, Abdul, Razak, D-3400 Göttingen (DE); WÜNN, Eberhard, D-3400 Göttingen-Nikolausberg (DE)
(74) Vertreter: Rucker, Ernst, Dr. Dipl.-Chem.
(86) Internationale Anmeldenummer: EP9200501
(87) Internationale Veröffentlichungsnummer: WO9215637

(56) Entgegenhaltungen:
- EP-A- 0 186 758
- DE-A- 3 929 648
- US-A- 2 397 231

## Beschreibung

Die Erfindung betrifft ein Verfahren zur Oberflächenmodifizierung von als mikroporöse Membran ausgebildete Formkörpern gemäß dem Oberbegriff des Anspruchs 1. Die Erfindung betrifft außerdem derartige gepfropfte Membranen sowie deren Verwendung für die adsorptive Stofftrennung.

### Stand der Technik

Nach einem bekannten verbreiteten Pfropfverfahren werden in die Kette eines Basispolymeren beispielsweise mit Hilfe energiereicher Strahlung radikalische Gruppen eingeführt, an denen die Pfropfung durch Radikalkettenpolymerisation erfolgen kann.

Die Anwendung der strahleninduzierten Pfropfung für die Oberflächenmodifizierung von Formkörpern nach bekannten Verfahren setzt jedoch nicht nur den Einsatz aufwendiger Apparaturen voraus, sondern hat auch Nachteile bezüglich der Eigenschaften der erhaltenen Produkte. Die Auswirkung der Strahlung und somit auch die Pfropfung läßt sich nicht auf die Oberfläche des Formkörpers beschränken. Wenn jedoch die Pfropfung auch im Inneren des Formkörpers eintritt, hat das zur Folge, daß sich sowohl dessen Dimensionen als auch die Bulkeigenschaften des verwendeten Polymeren ändern.

Andere Verfahren der Pfropfcopolymerisation beruhen auf Aktivierung unter Radikalbildung durch starke Oxidationsmittel, wie beispielsweise die Pfropfung auf Cellulose oder Polyamide in Gegenwart von Ce^{IV}-Salzen. Dieses Verfahren ist nur bei sehr niedrigen pH-Werten, nämlich bei pH<2 anwendbar, weil andernfalls eine hydrolytische Ausfällung des Ce^{IV}-Salzes eintritt. Bei den genannten Polymeren besteht bei diesen niedrigen pH-Werten die Gefahr des hydrolytischen Abbaus des Polymeren. Darüber hinaus kann auch bei diesem Verfahren die Pfropfung nicht auf die Oberfläche des Polymeren begrenzt werden.

Wieder andere Verfahren der Pfropfpolymerisation beruhen auf Kettenübertragung, indem durch einen Radikalinitiator eine Homopolymerisation des Monomeren in Gegenwart des zu pfropfenden Basispolymeren induziert wird, wobei in der Regel hohe Temperaturen angewandt werden müssen, um den Zerfall des Initiators zu bewirken. Ein weiterer Nachteil dieses Verfahrens besteht darin, daß grundsätzlich nur ein Teil des eingesetzten Monomeren für die Pfropfung wirksam wird, während der Rest als Homopolymerisat anfällt. Dadurch wird nicht nur die Monomerausbeute herabgesetzt, sondern es ergibt sich auch noch die Notwendigkeit, den Formkörper nach der Pfropfung von anhaftendem Homopolymerisat zu reinigen.

Ferner ist bekannt, Polyamide mit Acrylamid oder Acrylnitril als Monomere in der Weise zu pfropfen, daß in einer ersten Verfahrensstufe die Wasserstoffatome an den Stickstoffatomen durch Chloratome ersetzt werden. Die halogensubstituierten Polyamide werden dann durch Hydrazin oder Eisen-II-Salze wieder in das Ausgangspolymere überführt, wobei ein radikalischer Übergangszustand am Stickstoff auftritt. In Gegenwart der genannten Monomere erfolgt wie auch bei anderen Redox-initiierten Polymerisationsverfahren eine Radikalkettenpolymerisation am Stickstoff. Diese Reaktion wird beispielsweise von K.V. Phung und R.C. Schulz in "Makromolekulare Chemie", 180, 1825 (1979) beschrieben. Sie wurde in der genannten Arbeit angewandt, um den erwähnten radikalischen Übergangszustand bei der Reduktion nachzuweisen.

Eine andere Arbeit, welche die Pfropfung auf N-halogenierten Polyamiden zum Gegenstand hat, beschreibt die Initiierung durch Metallcarbonyle (C.H. Bamford, F.C. Duncan, R.J.W. Reynolds in "J. Polym. Sci." Teil C, 419-432 (1968).

Das letztgenannte Prinzip einer Pfropfung nach Chlorierung des Basispolymeren wird auch zur gezielten Oberflächenpfropfung von Förmkörpern aus stickstoffhaltigen Membranen und insbesondere von mikroporösen Membranen angewandt, wobei die Polymeren am Stickstoff ein durch Halogene substituierbares Wasserstoffatom aufweisen (siehe hierzu WO 91/03310 bzw. EP-A-90 913 482.7 sowie DE-A1-39 29 648.2). Ein weiteres und ähnliches Verfahren wird ebenfalls zur Oberflächenpfropfung von Formkörpern aus der genannten Klasse von Polymeren angewandt, wobei in diesem Fall die Chlorierung des Polymeren unterbleibt, jedoch die Pfropfung in Gegenwart von Tetrachlorkohlenstoff durchgeführt wird (siehe WO 91/03506 bzw. EP-A-90 913 193.0 sowie DE-A1-39 29 647.4).

Der Nachteil der beiden letztgenannten Pfropfverfahren besteht darin, daß sie einerseits nur bei einer bestimmten Klasse von Basispolymeren anwendbar sind und außerdem eine sorgfältige Kontrolle des Pfropfvorganges erfordern, um die Pfropfung auf die Oberfläche des Basispolymeren zu beschränken.

Nach der EP-A-0 186 758 wird ein poröses hydrophobes Membransubstrat aus einem ersten Polymer direkt auf seiner gesamten Oberfläche mit einem vernetzten zweiten Polymer beschichtet. Sofern die Beschichtung durch Pfropfung erfolgt, ist sie nicht auf die Oberfläche des Basispolymers beschränkt und führt nur zu geringen Pfropfgraden. In US-A-2 397 231 wird ein Formkörper als zusammengesetztes Laminat offenbart. Er besteht aus einer Kunststoff-Folie, die über eine Klebstoffschicht mit äußeren Kunststoff-Folien verbunden ist, wobei die äußeren Kunststoff-Folien durch Polymerisierung von unpolymerisierten Monomeren oder von teilweise polymerisierten Kunststoff-Zusammensetzungen erzeugt werden.

Die Erfindung hat sich die Aufgabe gestellt, neue gepfropfte als mikroporöse Membran ausgebildete Formkörper und ein einfach durchzuführendes Verfahren zum Pfropfen auf Membranen aus einem beliebigen Polymer zur Verfügung zu stellen, wobei die Pfropfung im Inneren des Formkörper-Polymeren auch bei Aufpfropfung großer Mengen eines Pfrofpolymeren vermieden werden soll. Ebenso sollen nachteilige Veränderungen des Formkörper-Polymeren durch die die Pfropfung einleitende Maßnahmen vermieden werden, wie sie z.B. durch hochenergetische Strahlung beobachtet werden.

Diese Aufgabe wird gelöst mit einem Verfahren gemäß Anspruch 1 sowie mit einer gepfropften Membran gemäß Anspruch 25.

Die Angabe "%" bedeutet nachfolgend Gew.-%, wenn nichts anderes angegeben ist.

Erfindungsgemäß wird auf die Oberfläche eines als mikroporöse Membran ausgebildeten Formkörpers (im folgenden kurz "Formkörper" genannt) aus einem ersten Polymer zunächst eine Schicht eines zweiten Polymeren entweder direkt oder gemäß einer bevorzugten Ausführungsform durch Aufbringen von dessen Vorstufen und anschließender Umsetzung zum zweiten Polymeren aufgebracht und anschließend die eigentliche Pfropfung auf die Schicht des zweiten Polymeren unter Ausbildung einer Schicht eines dritten Polymeren aus ethylenisch ungesättigten Monomeren durchgeführt. Die Erfindung ermöglicht es, die Pfropfung auf die Schicht des zweiten Polymeren zu begrenzen, ohne daß das erste Polymer durch Einlagerung von Pfropfpolymer eine nachteilige Veränderung erfährt. Die Pfropfung im Inneren des ersten Polymeren wird dadurch vermieden, daß unter Bedingungen gepfropft wird, unter denen eine Pfropfung auf dem ersten Polymer auf Grund von dessen chemischem Aufbau nicht eintreten kann.

### Die Art der Formkörper

Das erfindungsgemäße Verfahren ist prinzipiell für jede Art von Formkörpern aus Polymeren anwendbar, deren Oberflächeneigenschaften jedoch von den Bulkeigenschaften verschieden sein sollten. Die wichtigsten Oberflächeneigenschaften, die durch die Modifizierung beeinflußt werden können, sind die Benetzbarkeit, das Adsorptionsverhalten und die chemische Reaktivität.

Von besonderer Bedeutung ist die Verwendung der erfindungsgemäß gepfropften Formkörper für Verfahren der Stofftrennung, die nach dem Prinzip der Filtration oder Adsorption arbeiten. Dabei sind die Formkörper als mikroporöse Membranen ausgebildet. Mikroporöse Membranen werden eingeteilt in Mikrofiltrations- und Ultrafiltrationsmembranen, wobei die ersteren in einem Porengrößenbereich zwischen 0,05 und 15 µm liegen, und letztere durch ihr Rückhaltevermögen für Proteine verschiedener Molgewichte im Bereich etwa zwischen 5000 und 1 Million Dalton charakterisiert werden.

### Auswahl des ersten Polymeren

Das erste Polymer wird auf Grund der gewünschten mechanischen und chemischen Eigenschaften ausgewählt, die sich aus der vorgesehenen Anwendung des Formkörpers ergeben.

Es kommen alle gebräuchlichen Polymere in Frage. Im einzelnen sind dies z.B. Cellulose und Derivate davon (Cellulosehydrat, -acetat, -nitrat sowie deren Gemische), Polyolefine (insbesondere Polypropylen), Polysulfone, Polyethersulfone, aromatische und aliphatische Polyamide, Polysulfonamide, halogenierte Polymere wie Polyvinylchlorid, Polyvinylfluorid, Polyvinylidenfluorid und Polytetrafluorethylen, Polyester sowie Homo- und Copolymerisate des Acrylnitrils.

Wichtig für die Auswahl des ersten Polymeren ist, daß es im wesentlichen keine Matrixpfropfung erleidet. Diese Bedingung ist dann erfüllt, wenn an dem Formkörper ohne Aufbringung des zweiten Polymeren unter den vorgesehenen Pfropfbedingungen gravimetrisch keine Pfropfung festzustellen ist. Selbstverständlich ist es auch erforderlich, daß das erste Polymer weder bei der Aufbringung des zweiten Polymeren, beispielsweise durch Lösungsmittel, noch durch das Pfropfmedium geschädigt wird.

### Ausbildung der Schicht des zweiten Polymeren

Die Aufbringung des zweiten Polymeren auf den Formkörper ist von besonderer Bedeutung für das erfindungsgemäße Verfahren, insbesondere im Falle von Ultrafiltrations- und Mikrofiltrationsmembranen, weil die Dicke und die Gleichmäßigkeit dieser Polymerschicht entscheidend sind für die Eigenschaften des Endproduktes. Die aufgebrachte Schicht muß bei mikroporösen Membranen im allgemeinen die gesamte innere Oberfläche, also die Porenwandungen, vollständig bedecken, ohne jedoch zu einer Verstopfung der Poren zu führen.

Es ist erfindungsgemäß aber auch möglich, die spätere Pfropfung auf einen bestimmten Teil des Formkörpers zu beschränken, indem nur dieser mit dem zweiten Polymeren beschichtet wird. Diese Verfahrensvariante kann beispielsweise bei asymmetrischen Ultrafiltrationsmembranen angewandt werden, indem nur die bei der Filtration mit Protein in Kontakt kommende Skin-Schicht beschichtet und anschließend zur Verminderung der Proteinadsorption gepfropft wird.

Die einfachste Möglichkeit, die auch in vielen Fällen anwendbar ist, besteht darin, daß der Formkörper mit einer Lösung des zweiten Polymeren benetzt und anschließend das Lösungsmittel verdampft wird. Ist die Oberfläche des Formkörpers durch das vorgesehene Lösungsmittel, insbesondere im Falle von Lösungsmitteln hoher Oberflächenspannung wie z.B. Wasser oder Ameisensäure, nicht benetzbar, kann der Zusatz eines Tensids erforderlich sein. Es sind aber auch Zusätze von Nichtlösungsmitteln niedriger Oberflächenspannung, wie z.B. von Alkoholen, möglich, wenn die Konzentration unterhalb der zur Ausfällung des zweiten Polymeren erforderlichen Konzentration bleibt.

Bei mikroporösen Formkörpern kann dabei allerdings eine Anreicherung des zweiten Polymeren an den Wandungen der engsten Poren auftreten, weil beim Verdampfen des Lösungsmittels die verbleibende Lösung sich durch die Kapillarkräfte in diese zurückzieht, wodurch die Gleichmäßigkeit der Beschichtung beeinträchtigt werden kann.

Wenn sich dieser Effekt störend bemerkbar macht, ist es vorteilhafter, die Aufbringung des zweiten Polymeren durch Adsorption zu bewirken. Dies ist auch insbesondere im Falle von Ultrafiltrationsmembranen erforderlich, bei denen eine vollständige Austrocknung zu Zerstörung führen würde. Derartige Membranen werden üblicherweise entweder naß oder mit einem gewissen Mindestgehalt an einer schwerflüchtigen Flüssigkeit, meist Glycerin, gelagert, um den andernfalls auftretenden Verlust ihrer hydraulischen Permeabilität zu vermeiden.

In diesen Fällen wird das zweite Polymer adsorptive aufgebracht. Dazu wird eine Lösung des zweiten Polymeren mit der Oberfläche des Formkörpers für einen ausreichend langen Zeitraum in Kontakt gebracht, um die Adsorption des gelösten zweiten Polymeren auf der Oberfläche des Formkörpers zu ermöglichen und anschließend der Überschuß des zweiten Polymeren durch Nachwaschen entfernt. Für die Adsorption werden Zeiten zwischen 30 Sekunden und 30 Minuten angewandt, vorzugsweise zwischen 1 und 5 Minuten. Auf diese Weise können besonders gleichmäßige Schichten des zweiten Polymeren erzeugt werden.

Im Falle von Ultrafiltrationsmembranen, die bereits mit einer Flüssigkeit imprägniert sind, wird diese Flüssigkeit vorzugsweise in einem ersten Schritt durch das für das zweite Polymer vorgesehene Lösungsmittel verdrängt, wobei das Lösungsmittel und das Imprägnierungsmittel vorzugsweise miteinander mischbar sind, und erst anschließend der Kontakt mit der Lösung des zweiten Polymeren herbeigeführt.

Obwohl das Ausmaß der Adsorption des zweiten Polymeren an dem ersten nicht exakt voraussagbar ist und im konkreten Falle daher ein gewisses Maß an Empirie, insbesondere hinsichtlich des geeignetsten Lösungsmittels, erforderlich ist, sind doch einige qualitative Aussagen möglich. Als Faustregel kann dabei gelten, daß die Adsorption durch ein Lösungsmittel oder -gemisch begünstigt wird, das ein relativ geringes Lösevermögen für das zweite Polymer aufweist. Auch eine entgegengesetzte, wenn auch geringfügige elektrische Ladung des ersten und zweiten Polymeren oder ein hydrophober Charakter beider Polymerer wirkt in dieser Richtung.

Das zweite Polymer muß nicht als solches zur Beschichtung der Oberfläche des Formkörpers herangezogen werden. Eine bevorzugte Ausführungsform der Erfindung beruht darauf, daß Vorstufen des zweiten Polymeren auf der Oberfläche des Formkörpers unter Ausbildung des Polymeren zur Reaktion gebracht werden.

Die Vorstufen des zweiten Polymeren können sowohl aus der flüssigen Phase als auch aus der Gasphase auf die Oberfläche des Formkörpers aufgebracht werden. Im ersten Fall können die einzelnen Komponenten entweder gleichzeitig im Gemisch (vorzugsweise mit einem Lösungsmittel verdünnt), gegebenenfalls unter Zusatz eines die Reaktion zu dem Polymeren bewirkenden Katalysators, oder auch nacheinander aufgebracht werden. Die erste Arbeitsweise ist im allgemeinen bei Anwendung der flüssigen Phase bevorzugt.

Ein besonders vorteilhafter Weg, die Vorstufen des zweiten Polymeren auf die Oberfläche des Formkörpers aufzubringen ist die Adsorption aus der Gasphase. In diesem Fall wird der mit der Schicht zu versehende Formkörper nacheinander Atmosphären ausgesetzt, die einen bestimmten Partialdruck der jeweiligen Komponente aufweisen. Der Vorteil dieser Verfahrensvariante besteht darin, daß die miteinander reaktiven Vorstufen des zweiten Polymeren erst auf der Oberfläche des Formkörpers miteinander in Kontakt kommen und somit nicht vorzeitig miteinander reagieren können. Außerdem ist es bei der Anwendung von Gasphasen nicht erforderlich, einen eigenen Verdampfungsschritt für Lösungsmittel vorzusehen.

Die Reaktion der Vorstufen zu dem zweiten Polymer auf der Oberfläche des Formkörpers kann entweder spontan oder in einer Zeitreaktion erfolgen oder durch eine Temperaturerhöhung eingeleitet werden.

Bei Verwendung eines zweiten Polymeren, das reaktive chemische Gruppen enthält, die zur Ausbildung von kovalenten Bindungen zu dem ersten Polymeren befähigt sind, kann eine kovalente Bindung zwischen dem ersten und dem zweiten Polymer hergestellt werden. Ebenso ist es möglich, das zweite Polymer durch Vernetzung in einen unlöslichen Zustand zu überführen.

Vielfach ist auch die Pfropfung von einer Vernetzung des zweiten Polymeren begleitet, was daraus zu schließen ist, daß das aufgepfropfte dritte Polymer durch ein gemeinsames Lösungsmittel für das zweite und dritte Polymer im allgemeinen nicht mehr entfernt werden kann. Das dritte Polymer wird im allgemeinen auch unter Bedingungen, die normalerweise zum Abbau des zweiten Polymeren führen, nicht entfernt. So bleibt beispielsweise die Pfropfung selbst dann erhalten, wenn als zweites Polymer ein aliphatisches Polyamid benutzt wird und der gepfropfte Formkörper mit heißer Schwefelsäure behandelt wird. Unter diesen Bedingungen würde das Polyamid alleine in kürzester Zeit hydrolytisch abgebaut.

### Bevorzugte Pfropfverfahren

Das erfindungsgemäße Verfahren ist grundsätzlich für jede Kombination aus einem ersten und einem zweiten Polymeren geeignet, für das ein selektiv nur auf das zweite Polymer wirksames Pfropfverfahren zur Verfügung steht.

Von den im Abschnitt "Stand der Technik" erwähnten Pfropfverfahren werden erfindungsgemäß jene beiden Verfahren bevorzugt, welche die Pfropfung von ethylenisch ungesättigten Monomeren auf stickstoffhaltige Polymere in Gegenwart von Reduktionsmitteln ermöglichen, wobei die Polymeren am Stickstoff ein durch Halogene substituierbares Wasserstoffatom aufweisen. Bei diesen bevorzugten Pfropfverfahren werden die noch näher zu charakterisierenden stickstoffhaltigen Polymeren als zweites Polymer auf den Formkörper aufgebracht.

Das Charakteristikum des ersten dieser Verfahren besteht darin, daß die am Stickstoff befindlichen Wasserstoffatome vor der Pfropfung ganz oder teilweise durch ein Halogen, vorzugsweise Chlor oder Brom, ersetzt werden und daß man die Pfropfung in Gegenwart mindestens eines ethylenisch ungesättigten Monomeren und eines Reduktionsmittels durchführt. Dabei wird die Pfropfung durch Radikalbildung am Stickstoff eingeleitet.

Beim zweiten Verfahren wird anstelle der Halogenierung des zweiten Polymeren ein Zusatz von Tetrachlorkohlenstoff oder einer anderen organischen Halogenverbindung, z.B. Trichloressigsäure, während der Pfropfung angewandt.

### Auswahl des zweiten Polymeren

Die für die bevorzugten Pfropfverfahren als zweites Polymer in Frage kommenden Polymeren sind z.B. aromatische und aliphatische Polyamide, Polysulfonamide, Polyurethane und Polyharnstoffe. Bei den aliphatischen Polyamiden kommen sowohl alkohollösliche als auch alkoholunlösliche in Frage.

Wenn das zweite Polymer durch Beschichtung aus einem Lösungsmittel aufgebracht wird, kommen sämtliche handelsüblichen aliphatischen Polyamide in Frage, wobei je nach ihrer Löslichkeit entweder Ameisensäure oder Alkohol/Wasser-Gemische als bevorzugte Lösungsmittel angewandt werden.

Im Falle der alkoholunlöslichen Polyamide, wie z.B. Nylon 4,6, Nylon 6, Nylon 6,6, Nylon 6,10, Nylon 11 und Nylon 12, wird zur Senkung der Oberflächenspannung ein Zusatz eines Lösungsmittels niedriger Oberflächenspannung zur Ameisensäure angewandt. Bevorzugte Lösungsmittel niedriger Oberflächenspannung sind Alkohole und Ketone. So kann beispielsweise ein Ethanolzusatz von 5 bis 30 Gew.-%, vorzugsweise von 10 bis 20 %, bezogen auf Ameisensäure angewandt werden.

Die alkohollöslichen Polyamide, wie z.B. Ultramid 1 C (Bayer oder Evamid 8061 /DuPont) werden aus Lösungen in Alkohol-Wasser-Gemischen aufgebracht, z.B. aus einer Lösung in 60 bis 90-prozentigem, vorzugsweise 70 bis 80-prozentigem Ethanol.

Gemäß einer Ausführungsform der Erfindung wird das zweite Polymer vernetzt. Dies kann beispielsweise durch Aldehyde, vorzugsweise Formaldehyd oder durch Diisocyanate erfolgen. Die Zugabe des Vernetzunusmittelg kann sowohl gemeinsam mit dem Polymeren in der Lösung als auch nach dem Aufbringen des zweiten Polymeren erfolgen, entweder aus einer Lösung des Vernetzungsmittels oder über die Gasphase. Der letztere Weg wird im Falle der Vernetzung mit Formaldehyd bevorzugt, wobei gegebenfalls ein für die Vernetzung erforderlicher Katalysator, z.B. eine organische Säure wie Oxal- oder Citronensäure in einer Konzentration von 0,5 bis 2 % bezogen auf das zweite Polymer, vorzugsweise 1 bis 1,5 %, der Polymerlösung zugesetzt wird und anschließend eine Behandlung mit Formaldehyddämpfen erfolgt, gefolgt von einem Erhitzen auf 100 bis 160 °C, vorzugsweise 120 bis 140 °C. Die Dauer der Erhitzung beträgt je nach angewandter Temperatur 10 Sekunden bis 15 Minuten, vorzugsweise 30 Sekunden bis 5 Minuten. Um im Interesse hoher Produktionsgeschwindigkeiten kurze Behandlungszeiten zu gewährleisten, werden dabei hohe Behandlungstemperaturen bevorzugt, doch ist in der Praxis die obere Grenze durch die thermische Beständigkeit sowohl des ersten als auch des zweiten Polymeren gegeben.

Eine besonders bevorzugte Ausführungsform der Aufbringung einer vernetzten Polyamidschicht als zweites Polymer besteht darin, daß ein ganz oder teilweise hydroxy- oder methoxymethyliertes Polyamid aus einer Lösung aufgebracht wird, die auch den sauren Katalysator enthält und anschließend die Vernetzung durch den bereits beschriebenen thermischen Schritt durchgeführt wird. Die hydroxy- oder methoxymethlierten Polyamide sind durchwegs alkohollöslich und werden daher bevorzugt aus alkoholischen Lösungen aufgebracht. Ein Beispiel für ein derartiges im Handel erhältliches Produkt ist "Nylon 8 T-8E" (Unitika Co., Ltd., Japan), ein methoxymethyliertes Nylon 6.

Obwohl auch aromatische Polyamide, wie z.B. Nomex^{R} oder Kevlar^{R} (DuPont) grundsätzlich aus Lösungen aufgebracht werden können, wird in diesen Fällen wegen der eingeschränkten Löslichkeit der aromatischen Polyamide die Bildung des Polymeren in situ bevorzugt. Dies gilt auch für bestimmte aliphatische Polyamide, wie beispielsweise solche auf Basis der Oxalsäure, die Polyurethane und Polyharnstoffe. Die in situ-Bildung des zweiten Polymeren wird weiter unten beschrieben.

Als zweites Polymer kommen nicht nur solche Polyamide in Frage, die üblicherweise als Konstruktionswerkstoffe verwendet werden, sondern auch solche, die für andere Zwecke eingesetzt werden, wie z.B. die Polyamidharze und Schmelzkleber auf Polyamidbasis. Ein Beispiel für letztere Gruppe ist Macromelt^{R} 6238 (Henkel). Bei diesem Produkt wurde im Vergleich zu anderen Polyamiden eine besonders hohe Pfropftendenz festgestellt, was darauf hindeutet, daß eine besonders hohe Dichte an NH-Gruppen vorliegt.

Wenn bei der Pfropfung dasjenige der beiden bevorzugten Pfropfverfahren angewandt wird, dessen erster Schritt in einer N-Halogenierung des zweiten Polymern besteht, kann der Prozeß dadurch vereinfacht werden, daß das zweite Polymer bereits in halogenierter Form aufgebracht wird. Es ist bekannt, daß beispielsweise Nylon 6 und Nylon 6,6 durch Umsetzung mit anorganischenn oder organischen Hypochloriten quantitativ N-chloriert werden können und die entsprechenden N-Chlor-Polyamide sowohl in Ameisensäure als auch in Aromaten wie Toluol und Benzol sowie halogenierten Kohlenwasserstoffen wie Chloroform und Tetrachlorethan löslich sind. Bei unvollständiger Chlorierung sind die N-Chlor-Polyamide nur in Ameisensäure löslich. Es können sowohl die vollständig halogenierten als auch die teilhalogenierten Polyamide als zweites Polymer aufgebracht werden, gefolgt von der Pfropfung ohne weiteren Halogenierungsschritt.

### Technische Durchführung der in situ-Bildung der Schicht des zweiten Polymeren

Eine Schicht aus Polyamiden, insbesondere aromatischen Polyamiden, kann in situ durch Umsetzung von Dicarbonsäuredihalogeniden, wie z.B. Terephthalsäuredichlorid mit Diaminen gebildet werden. Dieses Verfahren wird bevorzugt in der Weise angewandt, daß nach der Aufbringung der Lösung des Dichlorids auf den Formkörper das Lösungsmittel zunächst verdampft und anschließend die Reaktion mit dem Diamin bewirkt wird, welches entweder ebenfalls aus einer Lösung oder über die Gasphase aufgebracht wird. Auf diese Weise ist es möglich, auch solche Polyamide als zweites Polymer heranzuziehen, die entweder auf Grund ihrer hohen Kristallinität in praktisch allen gängigen Lösungsmitteln unlöslich oder nur in solchen Lösungsmitteln löslich sind, die das erste Polymer angreifen würden.

Auf analoge Weise können auch bestimmte aliphatische Polyamide in situ auf dem Formkörper hergestellt werden, beispielsweise solche auf der Basis Oxalsäure (Polyoxamide). Im Falle der Polyoxamide wird dabei im allgemeinen nicht das Säurechlorid, sondern ein Diester der Oxalsäure (z.B. n-Butyloxalat) zur Reaktion mit dem Diamin eingesetzt. Diese Reaktion und die dafür verwendbaren Katalysatoren (z.B. Antimontrifluorid oder Arsentrioxid) sind in der Literatur beschrieben (R. Vieweg, A. Müller, Herausg.; "Kunststoff-Handbuch", Band VI, "Polyamide"; Carl Hanser Verlag München 1966, S. 146 bis 148).

Eine weitere Möglichkeit für die in situ-Bildung von Polyamiden bietet die Reaktion zwichen Diisocyanaten und Dicarbonsäuren, wobei die Polyamidbildung unter Kohlendioxidabspaltung eintritt. Diisocyanate stellen auch Ausgangskomponenten für die in situ-Bildung von Polyurethanen und Polyharnstoffen auf dem Formkörper dar.

5 Für die Aufbringung aus der Gasphase eignen sich auf Grund ihres relativ hohen Dampfdrucks vorwiegend die niedermolekularen Diisocyanate. wie z.B. 1,4-Butandiisocyanat, 1,6-Hexandiisocyanat, p-Phenylendiisocyanat, 2,4-, 2,5- und 2,6-Toluylendiisocyanat, 1,5 Naphthylendiisocyanat und 4,4-Diphenylmethandiisocyanat.

Für die in situ-Bildung von Polyamiden, Polyurethanen und Polyharnstoffen kommen auch schwerflüchtige, höhermolekulare Diisocyanate in Frage, die durch Umsetzung von Glykolen mit einem Überschuß von niedermolekularen Diisocyanten erhalten werden. Diese Produkte sind in der Literatur beschrieben (Ullmann's Encyklopädie der technischen Chemie, Bd. 14, S. 346 bis 347). Die verwendeten Glykole weisen längere Ketten mit wiederkehrenden Ether- oder Esterbindungen auf, wobei erfindungsgemäß die ersteren wegen ihrer höheren Hydrolysebeständigkeit bevorzugt werden. Diese höhermolekularen Diisocyante (Prepolymere) werden erfindungsgemäß aus einem inerten, wasserfreien Lösungsmittel, z.B. einem Keton, aufgebracht, wobei die Konzentration des Prepolymeren zwischen 0,1 bis 5 %, vorzugsweise 0,5 bis 2 % beträgt. Selbstverständlich ist es auch möglich, leichtflüchtige Diisocyanate aus einer Lösung aufzubringen, doch wird in diesem Fall die Gasphase bevorzugt, weil dann die Verdampfung des Lösungsmittels entfällt.

Die in situ-Bildung von Polyurethanen kann auch dadurch erfolgen, daß die Diisocyanatkomponente gemeinsam mit der Glykolkomponente aus einer Lösung aufgebracht wird, weil die relativ geringe Reaktionsfähigkeit der Hydroxylgruppe zu ausreichend langen Topfzeiten der Beschichtungslösung führt. Bei der in situ-Bildung von Polyamiden aus Diisocyanaten und Dicarbonsäuren oder Polyharnstoffen aus Diisocyanten und Aminen, Ammoniak oder Wasser hingegen ist dies im allgemeinen wegen der vorzeitig eintretenden Reaktion nicht möglich, und die beiden Komponenten müssen hintereinander aufgebracht werden.

Der Partialdruck der Vorstufe in der Gasphase kann durch Sättigung der Atmosphäre bei einer bestimmten Temperatur eingestellt werden. Im Falle der niedermolekularen Diisocyanate liegt diese Temperatur zwischen Raumtemperatur und etwa 20°C unter dem Siedepunkt des Diisocyanats, vorzugsweise zwischen 50 und 100 °C. Die Verweilzeit kann zwischen 30 Sekunden und 60 Minuten betragen, mehr bevorzugt ist ein Bereich von 2 bis 10 Minuten.

### Die Halogenierung des zweiten Polymeren

Wie bereits ausgeführt, erfolgt die Pfropfung beim ersten der beiden bevorzugten Pfropfverfahren am halogenierten Stickstoff des zweiten Polymeren. Sofern dieses also nicht in bereits halogenierter Form aufgebracht wird, muß es vor der Pfropfung ganz oder teilweise in das N-Halogenderivat überführt werden. Als Halogenierungsmittel sind anorganische und organische Chlor- und Bromverbindungen geeignet, in denen das Halogen mit der Oxidationszahl +1 auftritt. Anorganische Halogenierungsmittel sind das Hypochlorit- und Hypobromition bzw. die entsprechend dem pH-Wert damit im Gleichgewicht stehende unterchlorige oder unterbromige Säure. Unter den organischen Chlorierungsmitteln sind t-Butylhypochlorit, welches in einem organischen Lösungsmittel angewandt wird, sowie organische N-Chlorverbindungen, wie z.B. Chloramin T oder Dichlorisocyanursäure, die in wäßriger Lösung angewandt werden. Die beiden letztgenannten Chlorierungsmittel sind wegen ihrer Lagerbeständigkeit und ihres niedrigen Preises besonders bevorzugt.

Der bevorzugte pH-Bereich bei der Chlorierung liegt zwischen 5 und 7, wobei Werte um 6 besonders bevorzugt werden. Im Falle von Chloramin T scheint ein Wert von 6,3 besonders vorteilhaft zu sein, weil darunter die Wasserlöslichkeit des Produktes stark abnimmt. Der bevorzugte Konzentrationsbereich für Chloramin T liegt zwischen 0,1 und 3 %, wobei Werte zwischen 1 und 2 % besonders bevorzugt werden.

Die Chlorierungszeiten mit Chloramin T können zwischen 2 Sekunden und 10 Minuten liegen, vorzugsweise zwischen 30 und 60 Sekunden. Mit anorganischen Hypochloriten liegen die bevorzugten Konzentrationen bei 0,05 bis 3 % Aktivchlor, wobei der Bereich 0,1 bis 0,5 % bevorzugt wird. Die Chlorierungszeiten liegen bei 30 Sekunden bis 5 Minuten, vorzugsweise bei 1 bis 2 Minuten.

In einer speziellen Verfahrensvariante erfolgt die Halogenierung mit in situ erzeugtem Hypobromit, indem der zu bromierende mit dem stickstoffhaltigen Polymeren beschichtete Formkörper nacheinander einer Brom- und Ammoniakatmosphäre ausgesetzt wird.

Nach der Chlorierung des zweiten Polymeren ist es zweckmäßig, den Überschuß des Chlorierungsmittels durch Spülung zu entfernen, weil sonst die Gefahr der Homopolymerisation im Pfropfmedium besteht. Im Falle von porösen Formkörpern ist es außerdem zweckmäßig, den Formkörper vor dem Einbringen ins Pfropfmedium zu trocknen, um dessen Eintritt in die Poren zu beschleunigen (Ausnahme: Ultrafiltrationsmembranen).

Die Entfernung des Resthalogengehaltes aus der Oberfläche der gepfropften Formkörper nach erfolgter Pfropfung ist prinzipiell mit denselben Reduktionsmitteln möglich, die auch bei der Pfropfung eingesetzt werden. Darüber hinaus ist auch Natriumborhydrid oder Natriumhydrogensulfit verwendbar. Die anzuwendenden Konzentrationen sind unkritisch, sie können also zur Beschleunigung der Reaktion relativ hoch gewählt werden.

### Auswahl der Monomeren

Für die Anwendung der Erfindung sind einfach oder mehrfach ethylenisch ungesättigte Monomere geeignet, sofern sie eine, wenn auch geringe, Löslichkeit in überwiegend wäßrigen Systemen aufweisen. Unter überwiegend wäßrigen Systemen sind wäßrige Systeme zu verstehen, die außer dem Monomeren entweder keine weitere organische Komponente enthalten, oder ein wassermischbares Lösungsmittel in einer Konzentration, die jenes Maß nicht erreicht, das zur vollständigen Ausfällung von Natriumdithionit führt. Im Falle von Aceton als Lösungsmittel kann der Anteil beispielsweise bis zu 40 Gew.-% betragen. Bei Verwendung von Monomeren geringer Wasserlöslichkeit, wie z.B. von Glycidylmethacylat, kann dieses der Pfropfflotte auch in emulgierter Form zugesetzt werden.

Die Auswahl der Monomeren richtet sich naturgemäß nach der Art der Oberflächenmodifizierung, die durch Anwendung des erfindungsgemäßen Verfahrens erreicht werden soll.

Wenn durch die Pfropfung eine Benetzbarkeit des Formkörpers erreicht werden soll, was besonders im Falle von mikroporösen Membranen aus hydrophoben Polymeren, wie PVDF oder Polysulfon für Filtrationszwecke angestrebt wird, sind sämtliche hydrophilen Monomeren einschließlich der ionischen anwendbar. Für die Herstellung von Formkörpern, die für den Einsatz als Ionenaustauscher vorgesehen sind, werden ionische Monomere eingesetzt. Aus dieser Gruppe geeignet sind die ungesättigten Carbonsäuren, wie die Acrylund die Methacrylsäure, N-Acrylamidoglycolsäure, Trimethylammonium-2-hydroxypropylmethacrylatchlorid, Dimethylaminoethylmethacrylat, Diethylaminoethylmethacrylat, Sulfopropylmethacrylat, 2-Acrylamido-2-methylpropansulfonsäure (AMPS), Dimethylaminopropylmethacrylamid, Methacrylamidopropyltrimethylammoniumchlorid, N-Morphpolinopropylmethacrylamid, 4-Vinylpyridin, N-Vinylimidazol und Triethylammoniom-2-hydroxypropylmethacrylatchlorid.

Soll durch die Modifizierung das Adsorptionsvermögen für Proteine herabgesetzt werden, kommen vorwiegend nichtionische, hydrophile Monomere in Frage. Dies sind meist Monomere, die eine oder mehrere Hydroxylgruppen enthalten. Hydroxylgruppenhaltige Monomere eignen sich auch für nachträgliche Umsetzungen, beispielsweise die Bindung von Liganden für die Affinitätschromatographie. Geeignete nichtionische, hydrophile Monomere sind Vinylpyrrolidon, Hydroxyethylmethacrylat und -acrylat, Hydroxypropylmethacrylat und -acrylat, Dihydroxypropylmethacrylat (Glycerinmethacrylat) und -acrylat, Diethylenglycolmethacrylat, Octaethylenglycolmethacrylat, Acryl- und Methacrylamid, N-(tris-(hydroxymethyl))-methylmethacrylamid und -acrylamid, N-Hydroxyethylmethacrylamid, Vinylacetat (mit nachfolgender Verseifung zu gepfropftem Polyvinylalkohol).

Ein bevorzugtes hydroxylgruppenfreies Monomer für die hydrophil-adsorptionsmindernde Modifizierung, ist Morpholinoethylmethacrylat, welches zwar schwach kationischen Charakter besitzt, aber dennoch keine Tendenz zur Adsorption von Proteinen nach einem ionischen Mechanismus aufweist. So wird überraschenderweise auch die Adsorption von Serumalbumin, welches einen isoelektrischen Punkt von 4.6 aufweist, bei einem pH-Wert von 7 stark herabsetzt, obwohl das Protein unter diesen Bedingungen als Anion vorliegt und daher eigentlich eine erhöhte ionische Bindung an einer kationischen Oberfläche zu erwarten wäre.

Für verschiedene weitere Umsetzungen eignen sich auch die "reaktiven" Monomere. Dies sind solche, die unter besonders milden Bedingungen beispielsweise mit primären Aminogruppen zur Reaktion gebracht werden können. Diese sind daher besonders geeignet für nachträgliche Umsetzungen, wie z.B. die chemische Bindung von Proteinen, beispielsweise als Affinitätsliganden. Geeignete Vertreter der reaktiven Monomeren sind beispielsweise Glycidylmethacrylat und -acrylat, Methylacrylamidoglycolatmethylether, Acrolein und Methacrolein.

Ein für das erfindungsgemäße Verfahren besonders vielseitig einsetzbares reaktives Monomer ist Glycidylmethacrylat, weil es auf Grund seiner Epoxidgruppe zu vielfältigen weiteren Umsetzungen befähigt ist. So führt die Umsetzung mit Natriumsulfit unter Einführung der Sulfogruppe zu einem stark sauren Ionenaustauscher, die Reaktion mit Iminodiessigsäure unter Einführung der Iminodiacetatgruppe zu einem Chelataustauscher. Beide Reaktionen werden vorzugsweise in Gegenwart eines Phasentransferkatalysators, z.B. Tetra-n-butylammoniumbisulfat durchgeführt. Die Herstellung eines stark basischen Ionenaustauschers kann erfolgen durch Quarternisierung mit einem tertiären Amin, wobei wegen seiner besonderen Reaktionsfähigkeit Trimethylamin bevorzugt wird. Für die Herstellung eines schwach basischen Ionenaustauschers wird die Reaktion mit einem sekundären Amin durchgeführt, wobei in diesem Fall Diethylamin wegen der Ähnlichkeit des entstehenden Produktes mit der in der Ionenaustauschchromatographie von Protein weitverbreiteten DEAE-Gruppe bevorzugt wird.

Weitere geeignete Monomere sind Methylacrylat und -methacrylat, Ethylacrylat und -methacrylat, Methylvinylacetamid, sowie die mehrfach ethylenisch ungesättigten Monomere Pentaerythritdimethacrylat, Glycerindimethacrylat, Tetraethylenglycoldimethacrylat, Tetraethylenglycoldiacrylat, Methylenbisacrylamid, Trimethylolpropantrimethacrylat und -acrylat, Glycerintrimethacrylat und -acrylat sowie Glycerindiacrylat.

Die genannten Monomere sind sowohl alleine als auch im Gemisch anwendbar. Insbesondere ist es möglich, einfach und mehrfach ethylenisch ungesättigte Monomere in Kombination anzuwenden, wodurch die Aufpfropfung eines vernetzten Polymeren erreicht wird. Es können jedoch auch mehrfach ethylenisch ungesättigte Monomere alleine angewandt werden.

### Erhöhung der Benetzbarkeit und Verminderung der Proteinadsorption

Als Kriterium für die Benetzbarkeit eines Formkörpers durch eine Flüssigkeit kann deren Kontaktwinkel mit der Oberfläche des Formkörpers herangezogen werden, wobei ein Kontaktwinkel <90 gleichbedeutend mit "benetzbar" ist. Im Falle von porösen Formkörpern bedeutet Benetzbarkeit, daß die Flüssigkeit beim Kontakt mit dem porösen Formkörper von selbst, also ohne äußere Druckanwendung, in die Poren eindringt. Ist der Kontaktwinkel hingegen >90 °, ist hiefür ein bestimmter Überdruck der Flüssigkeit erforderlich (Intrusionsdruck). Die meisten für die Herstellung der erfindungsgemäßen Formkörper in Frage kommenden ersten Polymeren weisen für Wasser und andere Flüssigkeiten hoher Oberflächenspannung einen Kontaktwinkel >90 ° auf, was beispielsweise bei ihrem Einsatz als Filtrationsmedien störend ist.

Bei Pfropfung der genannten ionischen und nichtionischen hydrophilen Monomeren nach dem erfindungsgemäßen Verfahren wird der Kontaktwinkel des Formkörpers gegenüber Wasser unabhängig von der Art des ersten Polymeren generell auf <90° reduziert, der Formkörper wird also wasserbenetzbar. Im Extremfall erfolgt eine Kontaktwinkelreduktion bis 0 °, was vollständiger Benetzbarkeit entspricht. Vielfach wird auch Benetzbarkeit durch Flüssigkeiten noch höherer Oberflächenspannung als Wasser erreicht, also beispielsweise durch wäßrige Elektrolytlösungen. Bei Pfropfung von beispielsweise Hydroxyethylmethacrylat ist der erfindungsgemäß gepfropfte Formkörper auch durch eine gesättigte wäßrige Kochsalzlösung benetzbar.

Hinsichtlich der Auswirkung auf die Proteinadsorption besteht ein wesentlicher Unterschied zwischen den ionischen und den nichtionischen hydrophilen Monomeren. Während die ersteren naheliegenderweise sowohl eine Verminderung als auch eine Erhöhung der Proteinadsorption, in Abhängigkeit von der Ladung des Monomeren, dem pH-Wert des Mediums und dem isoelektrischen Punkt des Proteins bewirken können, ist für die letzteren eine generelle Verminderung der Proteinadsorption charakteristisch.

Das Ausmaß, in dem die Proteinadsorption herabgesetzt wird, hängt ab von der Art des Proteins, der Art des nichtionischen, hydrophilen Monomeren und häufig auch vom Pfropfgrad, wobei das Maximum an Adsorptionsminderung bei vollständiger Belegung der Oberfläche mit dem dritten Polymeren erreicht wird. Erfindungsgemäß wird eine Adsorptionsminderung auf 0,1 bis 50 % des Ausgangswertes des nichtmodifizierten Formkörpers erreicht, wobei im konkreten Einzelfall entschieden werden kann, welcher Wert tatsächlich anzustreben ist. Diese Frage ist in erster Linie im Falle besonders feinporiger Formkörper von Bedeutung, weil bei diesen die Dicke der durch die Modifizierung aufgebrachten Schichten die Größenordnung des Porendurchmessers erreichen kann und somit die hydraulische Permeabilität des porösen Formkörpers beeinträchtigt werden kann. In diesen Fällen ist also stets das Wechselspiel zwischen Verminderung der Proteinadsorption und der hydraulischen Permeabilität zu berücksichtigen, wobei im konkreten Fall entschieden werden muß, welcher Parameter für die vorgesehene Anwendung des Formkörpers die größere Bedeutung hat. Als Richtwert kann angegeben werden, daß auch im Falle feinporiger Formkörper, wie z.B. mikroporöser Membranen der nominellen Porengröße 0,2 µm, eine Verminderung der Proteinadsorption auf 1 bis 10 % des Ausgangswertes der unmodifizierten Membrane erreicht wird, ohne daß die hydraulische Permeabilität entscheidend herabgesetzt wird.

### Das Aufpfropfen des dritten Polymeren

Bei beiden bevorzugten Pfropfverfahren erfolgt die Pfropfung in Gegenwart eines Reduktionsmittels in im wesentlichen wäßriger Lösung. Die Monomerkonzentration in der Pfropfflotte kann je nach Reaktivität des Monomeren und dem angestrebten Pfropfgrad in weiten Grenzen, nämlich zwischen 0,1 und 50 %, schwanken, wobei der bevorzugte Bereich zwischen 0,5 und 10 % liegt.

Technisch gesehen kann die Pfropfung grundsätzlich entweder nach einem Tauchverfahren durchgeführt werden, bei dem sich der Formkörper während der Pfropfung in der Pfropfflotte befindet, oder es kann ein Imprägnierverfahren angewandt werden, was besonders im Falle poröser Formkörper bevorzugt wird. In diesem Fall wird der Formkörper mit der Pfropfflotte benetzt und die Pfropfung erfolgt hinterher in einer Inertgasatmosphäre, vorzugsweise unter Stickstoff. Im Falle von porösen Bahnmaterialien, wie mikroporösen Membranen, kann die Benetzung mit der Pfropfflotte kontinuierlich beispielsweise mit einer Schlitzdüse, mit einem Foulard oder durch einfaches Eintauchen erfolgen.

Das bevorzugte Reduktionsmittel für die Anwendung des erfindungsgemäßen Verfahrens ist Natriumdithionit sowie dessen Folgeprodukte, wie z.B. Rongalit. Andere Reduktionsmittel wie Hydrazin oder Ascorbinsäure, letztere im alkalischen Bereich, sind ebenfalls einsetzbar.

Ein weiteres geeignetes Reduktionsmittelsystem ist in der Literatur im Zusammenhang mit redoxinitiierten Polymerisationen beschrieben (R.W. Brown, C.V. Bawn, E.B. Hansen, L.H. Howland in "Ind. Eng. Chem." 46, 1073-1080 (1954) und besteht aus einer Kombination von EDTA-komplexiertem Fe²⁺ mit Rongalit bei etwa pH=10. Rongalit selbst ist bei Raumtemperatur für das erfindungsgemäße Verfahren weitgehend unwirksam, wohl aber bei Temperaturen ab 40 bis 50 °C, wo es ein ausreichendes Redoxpotential entwickelt.

Bei Verwendung von Natriumdithionit als Reduktionsmittel wird ein pH-Bereich von 5 bis 10 angewandt , wobei der besonders bevorzugte Bereich zwischen 7,5 und 8,5 liegt.

Die Konzentration des Natriumdithionits kann zwischen 0,005 und 1 % liegen, wobei der Bereich zwischen 0,01 und 0,2 % bevorzugt wird. Wenn dabei ein Pfropfbad über einen längeren Zeitraum benutzt wird, kann das Redoxpotential während der Pfropfung potentiometrisch bestimmt und über die Zudosierung eines Natriumdithionitkonzentrates konstant gehalten werden. Typische Werte für ein geeignetes Redoxpotential liegen zwischen -100 und -700 mV, bevorzugt zwischen - 300 und -500 mV. Vorzugsweise wird ferner ein konstanter pH-Wert eingehalten, der durch ein entsprechend gepuffertes Pfropfmedium oder über Zudosierung von Lauge erreicht werden kann.

Während für die Pfropfung nach Halogenierung des zweiten Polymeren in der Pfropfflotte außer dem Reduktionsmittel und dem Monomeren keine weiteren Zusätze erforderlich sind, ist für das andere Verfahren außerdem die Gegenwart bestimmter organischer Halogenverbindungen erforderlich. Der Mechanismus dieser Reaktion ist derzeit ungeklärt. Es ist nur bekannt, daß ein Zusatz von Tetrachlorkohlenstoff schon in sehr geringen Konzentrationen (z.B. bei der Sättigungskonzentration in Wasser, die bei 0,07 % liegt) wirksam wird, während von der ebenfalls wirksamen Trichloressigsäure höhere Anteile von 0,2 bis 5 %, vorzugsweise 0,5 bis 5 2 % erforderlich sind.

Bei Verwendung von Tetrachlorkohlenstoff als organischer Halogenverbindung gibt es außer dem Zusatz zur Pfropfflotte noch weitere vorteilhafte Möglichkeiten der 0 Zuführung. Er kann dem Formkörper entweder vor oder während der Pfropfung zugeführt werden. Vor und während der Pfropfung kann er über eine zwischen 0 und 50 °C mit Tetrachlorkohlenstoff gesättigte Atmosphäre, mit der der Formkörper in Kontakt gebracht wird, zugeführt werden oder vor der Pfropfung durch Imprägnierung mit Tetrachlorkohlenstoff und Verdampfung des Überschusses oder Imprägnierung mit einer Lösung von Tetrachlorkohlenstoff der Konzentration 1 bis 10 % in einem flüchtigen Lösungsmittel, beispielsweise Aceton und anschließende Verdampfung des Lösungsmittels.

Die Pfropfung kann bei beiden Verfahren bei relativ niedrigen Temperaturen von etwa 0 bis 50 °C ausgeführt werden, wobei der Bereich um Raumtemperatur wegen des Wegfalls von Heizung und Kühlung eine besonders einfache apparative Lösung ermöglicht. Da die Pfropfung jedoch bei Temperaturen bis 100° C durchgeführt werden kann und eine Temperaturerhöhung eine Beschleunigung der Pfropfung bewirkt, beruht eine besonders bevorzugte Ausgestaltung der Erfindung darauf, daß nach dem Imprägnierverfahren gearbeitet wird, wobei die Imprägnierung zwischen 0 °C und Raumtemperatur erfolgt und anschließend in einer Inertgasatmosphäre einer Temperatur zwischen Raumtemperatur und 100 °C, vorzugsweise zwischen 30 und 60 °C gepfropft wird. Diese Verfahrensvariante ist deshalb besonders vorteilhaft, weil die Pfropfflotte bei niedrigen Temperaturen stabiler ist, d.h. weniger zur Homopolymerisation neigt.

Die Pfropfdauer und die Monomerkonzentration richten sich in erster Linie nach dem gewünschten Pfropfgrad, der seinerseits von der beabsichtigten Anwendung des gepfropften Formkörpers sowie seiner spezifischen Oberfläche abhängt. Praktisch anwendbare Bereiche der Pfropfdauer liegen zwischen 1 und 30 Minuten, wenn ein kontinuierliches Verfahren angewandt wird, wobei der Bereich zwischen 3 und 10 Minuten bevorzugt wird. Wird diskontinuierlich gepfropft, wie dies im Falle von Bahnmaterial zweckmäßigerweise auf einem Jigger, einem in der Textilindustrie zum Färben von Gewebebahnen gebräuchlichen Apparat, durchgeführt werden kann, bei dem die Bahn wiederholt durch die Pfropfflotte geführt wird, können auch beliebig lange Pfropfzeiten realisiert werden. Dies ist insbesondere dann von Bedeutung, wenn entweder extrem hohe Pfropfgrade angestrebt oder Monomere extrem niedriger Pfropftendenz eingesetzt werden sollen. Im Interesse einer ökonomischen Produktion erscheint hier eine obere Grenze der Pfropfdauer von 2 Stunden angebracht, die untere Grenze liegt bei etwa 15 Minuten. Der bevorzugte Bereich liegt in diesem Fall zwischen 30 und 60 Minuten. Für die Pfropfung über längere Zeiträume ist das ohne Chlorierung des zweiten Polymeren arbeitende Verfahren besser geeignet, weil keine Erschöpfung der N-Cl-Gruppen eintreten und die Pfropfung dadurch nicht vorzeitig zum Stillstand kommen kann.

### Der Pfropfgrad

Unter Pfropfgrad wird die Massenzunahme an dem dritten Polymeren bei der Pfropfung, bezogen auf die Masse des ersten Polymeren verstanden. Es ist ein besonderes Charakteristikum des erfindungsgemäßen Verfahrens, daß die zur Erreichung eines bestimmten Effektes erforderlichen Pfropfgrade um etwa eine Zehnerpotenz niedriger liegen, als wenn der Formkörper zur Gänze aus dem der Aufpfropfung zugänglichen Polymeren, z.B. einem Polyamid besteht. Zusätzlich zu den bereits erwähnten Vorteilen des erfindungsgemäßen Verfahrens ergibt sich daraus auch eine Einsparung an Kosten für das Monomer.

Bei den anzustrebenden Pfropfgraden ist zu unterscheiden zwischen denjenigen Modifizierungen, bei denen nur bestimmte Oberflächeneigenschaften, wie z.B. die Benetzbarkeit oder das Adsorptionsvermögen verändert werden sollen, und denen, bei denen eine Bindungskapazität für bestimmte Substanzen erreicht werden soll, wie z.B. bei Ionenaustauschern oder Affinitätsmembranen. Im ersten Fall ist lediglich eine Abschirmung der Oberfläche durch das dritte Polymer erforderlich, im zweiten Fall hingegen die Aufbringung einer möglichst großen Schichtdicke, um durch ein großes Volumen an adsorptionsfähigem Polymer eine möglichst große 5 Bindungskapazität zu gewährleisten. Die oberste Grenze ist dabei durch die infolge der Porenverengung bewirkte Durchflußminderung gegeben. Im ersten Fall können somit die Pfropfgrade wesentlich niedriger sein als im zweiten. Ein weiterer Gesichtspunkt bei der Beurteilung von Pfropfgraden ist die spezifische Oberfläche des Formkörpers. Je größer diese ist, umso höher ist auch der optimale Pfropfgrad.

Unter den als mikroporöse Membranen ausgebildeten Formkörpern ist die spezifische Oberfläche umso größer, je kleiner die Porengröße ist. Diese kann im Bereich zwischen 0,05 und 15 µm liegen.

Unter Berücksichtigung dieser Randbedingungen wird verständlich, daß die Pfropfgrade in dem weiten Bereich zwischen 0,1 und 50 % liegen können, wobei die obere Grenze für die Anwendung als Adsorbentien, also für Membranionenaustauscher oder Affinitätsmembranen gilt. Der bevorzugte Bereich liegt zwischen 0,5 und 10 %.

Besonders auffällig ist bei den erfindungsgemäß bevorzugten Pfropfverfahren, daß der Massenanteil des zweiten Polymeren bezogen auf das erste Polymere selbst bei mikroporösen Membranen, die eine besonders hohe spezifische Oberfläche haben, sehr gering sein kann, nämlich 0,01 bis 10 %, vorzugsweise 0,1 bis 2 %. Aus unbekannten Gründen ist dabei eine Abhängigkeit des erforderlichen Massenanteils des zweiten Polymeren von der Art des ersten Polymeren erkennbar. Er liegt beispielsweise bei Cellulosehydrat wesentlich niedriger als bei Polyethersulfon.

Der Massenanteil des dritten Polymeren bezogen auf das zweite kann demzufolge in weiten Bereichen, nämlich zwischen 50 und 5000 % schwanken, der Anteil des dritten Polymeren kann also den des zweiten bei weitem übersteigen.

Die nachfolgenden Beispiele erläutern die Erfindung weiter.

### Beispiel 1.

Es wurde eine Beschichtungslösung folgender Zusammensetzung hergestellt:
5 % Nylon 8 T-8-E (Firma Unitica Co., Ltd, ein methoxymethyliertes Nylon 6 mit einem Methoxymethylierungsgrad von 30 %)
0,1 % Citronensäure
Rest Ethanol/Wasser 3/1 (Volumensteile).

Mit der Lösung wurden abgewogene mikroporöse Membranen der nominellen Porengröße 0,45 µm und mit einem Durchmesser von 50 mm durch Eintauchen imprägniert, die überschüssige Lösung abgestreift und das Lösungsmittel mit einem Fön zum Verdunsten gebracht. Anschließend wurden die Proben 15 Minuten im Trockenschrank auf 140 °C erhitzt und mit Ethanol/ Wasser 3/1 gewaschen, bei 60 °C getrocknet, gewogen und 10 Minuten bei Raumtemperatur in einer Pfropflösung folgender Zusammensetzung gepfropft:
5 % Glycidylmethacrylat, emulgiert mit 0,3 % Araltone -G (Atlas)
0,1 % Na-Dithionit
1 % Tetrachlorkohlenstoff (als Bodenkörper)
Rest 0,15 M Phosphatpuffer pH 8.

Nach der Pfropfung wurden die Proben 10 Minuten unter fließendem Wasser und 2 mal mit Aceton gespült, 15 Minuten bei 60 °C getrocknet und gewogen. Anschließend wurde über einen Zeitraum von 30 Minuten bei 95 °C eine Sulfonierung in einer wäßrigen Lösung folgender Zusammensetzung durchgeführt:
20 % Natriumsulfit
5 % Tetra-n-butylammoniumbisulfat
5 % prim. Na-Phosphat-Dihydrat
mit Natronlauge auf pH 8 gestellt.

Nach Spülung und Trocknung wie oben wurde die Bindungskapazität des erhaltenen stark sauren Membranionenaustauschers mit Cytochrom C bestimmt, indem eine 0,1-prozentige Lösung des Testproteins bei einem Druck von 1 bar bis zum Durchbruch des Proteins durch die Membranen filtriert wurde. Der Proteingehalt des Filtrats wurde photometrisch bei 550 nm bestimmt.
- Membranproben: PVDF: Durapore-Membranen aus Polyvinylidenfluorid (hydrophob) der Firma Millipore
- CH: SM 11606 Cellulosehydratmembran der Firma Sartorius AG

Die Gewichtszunahmen wurden auf die unbehandelten Ausgangsmembranen bezogen.

| | Gewichtszunahme (%) | | Bindungskapazität für Cytochrom C (µg/cm²) |
|---|---|---|---|
| | nach Nylon 8-Beh. | nach Pfropfung | |
| PVDF | 10 | 12 | 568 |
| CH | 11 | 15 | 380 |

| Durchflußleistung (ml/cm² min bar) | | | |
|---|---|---|---|
| | vor Behandlung | nach Pfropfung | nach Sulfonierung |
| PVDF | 38 | 11,8 | 3,1 |
| CH | 40 | 10 | 9,7 |

### Beispiel 2

Beschichtung und Pfropfung einer hydrophoben PVDF-Membrane wie in Beispiel 1, jedoch anstelle des Glycidylmethacrylats und des Emulgators 3 % Morpholinoethylmethacrylat in der Pfropflösung. Die gepfropften Membranen wurden 3 Stunden in einer 0,1 %igen Lösung von gamma-Globulin in 10 mM Phosphatpuffer pH=7 bei Raumtemperatur geschüttelt. Anschließend erfolgte eine Bestimmung des adsorbierten Proteins nach Spülen mit demselben Puffer nach der BCA-Methode (Pierce). Die Gewichtszunahme bei der Pfropfung betrug 1,3 %.

Die gamma-Globulinadsorption sank bei der Pfropfung von 118 µg/cm² auf 5 µg/cm² , die Durchflußrate blieb unverändert bei 40 ml/cm² min bar, und die Probe war zum Unterschied von dem hydrophoben Ausgangsmaterial mit Wasser spontan benetzbar.

### Beispiel 3

Eine PVDF-Membrane wurde mit einer Lösung folgender Zusammensetzung imprägniert:
2,5 % Polyol PU 704
1,0 % Härter 700 (Diisocyanat, beide Firma WEVO)
Rest Methylethylketon

Nach Trocknung wie in Beispiel 1 wurde das Polyurethan 10 Minuten bei 100 °C im Trockenschrank ausgehärtet. Die Pfropfung erfolgte wie in Beispiel 1, jedoch mit der Ausnahme, daß zusätzlich 1 % Glycerinmethacrylat zugesetzt wurde. Die weiteren Schritte waren ebenfalls identisch mit Beispiel 1.

Die Gewichtszunahme bei der Polyurethanbeschichtung betrug 6,7 %, bei der Pfropfung 7,2 %, der Durchfluß nach der Sulfonierung 10,6 ml/cm² min bar, und die Bindungskapazität für Cytochrom C 759 µg/cm².

### Beispiel 4

Cellulosehydratmembranen der Porengröße 5 µm von N-chloriertem Nylon 6,6 wurden in Methylenchlorid unterschiedlicher Konzentrationen getaucht und 7 Minuten im Trockenschrank bei 80°C getrocknet. Anschließend wurden sie wie in Beispiel 1, jedoch mit unterschiedlichen Zeiten mit Glycidylmethacrylat gepfropft, sulfoniert und die Bindekapazität bestimmt.

Folgende Ergebnisse wurden erhalten:

| | | | |
|---|---|---|---|
| Beschichtungskonzentration [%] | 0,001 | 0,01 | 0,1 |
| Pfropfdauer [min] | 10 | 5 | 7 |
| Pfropfgrad [%] | 2 | 4 | 11 |
| Cytochrom-C Kap. [µg/cm2] | 660 | 1750 | 1080 |
| Durchfluß [ml/min bar cm²] | 54 | 140 | 51 |

### Beispiel 5

PVDF-Mikrofilter von 0,45 µm nomineller Porenweite (Millipore, Typ HVHP) wurden aus einer Lösung von 0,3% N-Cl-Nylon 6,6 in Methylenchlorid/Methanol 6/1 (Volumsteile) wie in Beispiel 4 beschichtet.

Anschließend wurden die Filter in Methanol vorbenetzt, mit RO-Wasser gespült und 15 Minuten in Lösungen folgender Zusammensetzung gepfropft:
3 % Monomer
0.01 % Natriumdithionit
Rest 0,15 M Phosphatpuffer pH 7.5

Anschließend wurde wie in Beispiel 1 gespült und getrocknet.

Es wurden bei Verwendung von 2 Monomeren folgende Meßwerte erhalten (Proteinadsorption = Adsorption von gamma-Globulin, bestimmt wie in Beispiel 2):

| Monomer Hydroxyethylmethacrylat Morpholinoethylmethacrylat | | |
|---|---|---|
| Pfropfgrad (%) | 8 | 2.4 |
| Proteinadsorption (µg/cm² ) | 10.8 | 12.3 |

Beide Proben wurden zum Unterschied von der ungepfropften Ausgangsmembrane von Wasser spontan benetzt.

### Beispiel 6

Polyethersulfon-Mikrofilter mit einer Proteinadsorption von 95 µg/cm² wurden aus einer 0,2-prozentigen Lösung von N-Cl-Nylon 6,6 in Ameisensäure beschichtet und wie in Beispiel 4 getrocknet. Anschließend wurde 5 Minuten in folgender Lösung gepfropft:
3 % Hydroxyethylmethacrylat
0,01 % Natriumdithionit
Rest 0,15 M Phosphatpuffer pH 7,5.

Der Pfropfgrad betrug 8 %, die Proteinadsorption 9 µg/cm².

Die niedrige Proteinadsorption blieb auch nach Einwirkung von Säuren und Laugen erhalten:

| | Einwirkungsdauer (Tage) | |
|---|---|---|
| | 1 | 6 |
| | Proteinadsorption (µg/cm² ) | |
| 5 N NaOH bei Raumtemperatur: | 8 | 10 |
| 1 N NaOH bei 50 °C | 11 | 13 |
| 2 N H₂SO₄ bei Raumtemperatur | 7 | 6 |
| 1 N H₂SO₄ bei 50 °C | 12 | n.b. |

### Beispiel 7

Polyethersulfon-Mikrofilter - 0,65 µm nominelle Porengröße - wurden aus verschieden konzentrierten Lösungen von N-Cl-Nylon 6,6 in Ameisensäure beschichtet, in oben beschriebener Weise getrocknet, in einer Pfropfflotte bestehend aus 2 % GylMA, emulgiert mit 0,05 % Arlatone-G (ICI), in 0,15 M Phosphatpuffer pH=7,5 mit 0,02 % Natriumdithionit gepfropft und wie oben beschrieben weiterbehandelt, sulfoniert und die Bindekapazität für Cytochrom-C getestet.

| Beschicht. konz. | Pfropfdauer | Pfropfgrad | Cyto-C bindung | Durchfluß |
|---|---|---|---|---|
| [%] | [min] | [%] | [µg/cm²] | [ml/min bar cm² ] |
| 0,02 | 15 | 4 | 300 | 77 |
| 0,05 | 15 | 6 | 420 | 53 |
| 0,1 | 3 | 6 | 580 | 52 |
| 0,5 | 2 | 4 | 120 | 108 |
| 2,0 | 1 | 6 | 96 | 94 |

### Beispiel 8

Polyethersulfon-Mikrofilter von 0,2 µm nomineller Porengröße wurden aus einer 0,2-prozentigen Lösung von N-Cl-Nylon 6,6 in Ameisensäure beschichtet, getrocknet und anschließend bei verschiedenen Temperaturen gepfropft. Die Lösung bestand in allen Fällen aus 3 % Hydroxyethylmethacrylat und 0,01 % Natriumdithionit in 0,15 M Phosphatpuffer pH 7,5. Die Pfropfdauer betrug 15 Minuten.

| Pfropftemperatur (°C) | Pfropfgrad (%) |
|---|---|
| 20 | 8.3 |
| 30 | 26.0 |
| 40 | 48.3 |

### Beispiel 9

Ein Polyethersulfon-Ultrafilter wurde mit Ameisensäure gespült, unter einer Glasplatte mit der Skin-Schicht nach unten befestigt und mit einer Gummirolle mit einer 0,2-prozentigen Lösung von N-Cl-Nylon 6,6 in Ameisensäure/Glycerin 3/1 (Volumsanteile). Das Filter wurde anschließend kurz in Ameisensäure getaucht und bis zur Pfropfung in Wasser aufbewahrt. Die Pfropfung erfolgte 5 Minuten in einer Lösung von 3 % 2-(N-Morpholino)ethylmethacrylat und 0,1 % Na-Dithionit in 0,15 M Phosphatpuffer pH=7,5. Der Pfropfgrad betrug 1,5 %. Nach Filtration einer 0,1-prozentigen Cytochrom C-Lösung wurde die Membrane deutlich weniger angefärbt als eine nicht gepfropfte Vergleichsprobe, was auf eine Verminderung der Proteinadsorption schließen läßt.

## Patentansprüche

1. Verfahren zur Oberflächenmodifizierung von als mikroporöse Membran ausgebildeten Formkörpern, bei dem man die Formkörper mit ethylenisch ungesättigten Monomeren pfropft,
**dadurch gekennzeichnet,** daß man
a) auf der Oberfläche eines Formkörpers aus einem ersten Polymer eine Schicht eines zweiten Polymers bildet und anschließend
b) ein drittes Polymer auf der Schicht des zweiten Polymers bildet, indem man auf der Schicht des zweiten Polymers mindestens ein ethylenisch ungesättigtes Monomer aufpfropft,
wobei eine Pfropfung auf dem Formkörper aus dem ersten Polymer auf Grund von dessen chemischem Aufbau ohne Aufbringung der Schicht des zweiten Polymers nicht eintreten kann.

2. Verfahren nach Anspruch 1, dadurch gekennzeichnet, daß man zur Bildung der Schicht des zweiten Polymers niedermolekulare Vorstufen des zweiten Polymers auf der Oberfläche der Membran zur Reaktion bringt.

3. Verfahren nach Anspruch 1 oder 2, dadurch gekennzeichnet, daß man die Bildung der Schicht durch Aufbringen einer Lösung des zweiten Polymers oder der nieder,molekularen Vorstufen auf die Oberfläche der Membran und anschließendes Verdampfen des Lösungsmittels durchführt.

4. Verfahren nach Anspruch 3 unter Verwendung von niedermolekularen Vorstufen des zweiten Polymers, dadurch gekennzeichnet, daß man der Lösung einen Katalysator zusetzt, der die Reaktion der niedermolekularen Vorstufen zum zweiten Polymer auslöst.

5. Verfahren nach den Ansprüchen 1 oder 2, dadurch gekennzeichnet, daß man die Bildung der Schicht durch Adsorption des Polymeren oder seiner niedermolekularen Vorstufen aus einer Lösung durchführt.

6. Verfahren nach Anspruch 2, dadurch gekennzeichnet, daß man die niedermolekularen Vorstufen auf die Schicht des ersten Polymers aus der Gasphase aufbringt und anschließend zur Reaktion bringt.

7. Verfahren nach den Ansprüchen 2 bis 6, dadurch gekennzeichnet, daß man die niedermolekularen Vorstufen nacheinander auf die Oberfläche der Membran aufbringt.

8. Verfahren nach den Ansprüchen 1 bis 7, dadurch gekennzeichnet, daß man ein zweites Polymer oder dessen niedermolekulare Vorstufen verwendet, die zur chemischen Reaktion mit der Oberfläche der Membran befähigt sind.

9. Verfahren nach den Ansprüchen 1 bis 8, dadurch gekennzeichnet, daß man das zweite Polymer nach seiner Aufbringung auf die Oberfläche der Membran durch Vernetzung in einen unlöslichen Zustand überführt.

10. Verfahren nach den Ansprüchen 1 bis 9, dadurch gekennzeichnet, daß man ein zweites Polymer verwendet, welches entweder in der Hauptkette oder in der Seitenkette Stickstoffatome enthält, an denen durch Halogene substituierbare Wasserstoffatome sitzen, bevorzugt ein aromatisches oder aliphatisches Polyamid oder Polysulfonamid, ein Polyurethan oder einen Polyharnstoff.

11. Verfahren nach Anspruch 10, dadurch gekennzeichnet, daß man ein N-hydroxymethyliertes oder N-methoxymethyliertes Polyamid verwendet, welches man nach dem Aufbringen auf die Oberfläche des ersten Polymers thermisch vernetzt, bevorzugt mit einer Säure oder einem in der Hitze Säure abspaltenden Substanz als Vernetzungskatalysator.

12. Verfahren nach Anspruch 10, dadurch gekennzeichnet, daß man ein Polyurethan mit einer auf Esterbasis oder vorzugsweise Etherbasis aufgebauten Diolkomponente verwendet, wobei man bevorzugt entweder die Diolkompente und die Diisocyanatkomponte des Polyurethans gemeinsam aus einer Lösung aufbringt und anschließend zur Reaktion bringt oder zuerst die Diolkompnente aus einer Lösung des Diols aufbringt und anschließend die Diisocyanatkomponente aus der Gasphase und die beiden Komponenten auf die Oberfläche der Membran zur Reaktion bringt.

13. Verfahren nach Anspruch 10, dadurch gekennzeichnet, daß man den Harnstoff auf der Obfläche des Formkörpers durch Reaktion zwischen einem Diisocyanat und einem Diamin bildet, wobei man bevorzugt das Diisocyanat und das Diamin nacheinander über die Gasphase auf die Oberfläche der Membran aufbringt.

14. Verfahren nach den Ansprüchen 1 bis 13, dadurch gekennzeichnet, daß man die Pfropfung des mindestens einen ethylenisch ungesättigten Monomers so durchführt, daß man in einer ersten Stufe den am Stickstoff des zweiten Polymers sitzende Wasserstoff durch ein Halogen, vorzugsweise Chlor oder Brom, substituiert und anschliessend in Gegenwart eines Reduktionsmittels mit mindestens einem ethylenisch ungesättigten Monomeren umsetzt.

15. Verfahren nach den Ansprüchen 1 bis 9, dadurch gekennzeichnet, daß man als zweites Polymer ein N-halogeniertes Polymer verwendet, in dem das Halogen die Oxidationsstufe +1 aufweist und die Pfropfung durch Einwirkung eines Reduktionsmittels und des mindestens einen ethylenisch ungesättigten Monomeren erfolgt.

16. Verfahren nach den Ansprüchen 1 bis 13, dadurch gekennzeichnet, daß man die Pfropfung des mindestens einen ethylenisch ungesättigten Monomeren in Gegenwart einer organischen Halogenverbindung, bevorzugt Tetrachlorkohlenstoff oder Trichloressigsäure, und eines Reduktionsmittels durchführt.

17. Verfahren nach den Ansprüchen 1 bis 16, dadurch gekennzeichnet, daß die Formkörper aus dem ersten Polymer mikroporöse Membranen in Gestalt von Ultrafiltrations- oder Mikrofiltrationsmembranen darstellen.

18. Verfahren nach den Ansprüchen 1 bis 17, dadurch gekennzeichnet, daß man als Membran Bahnmaterial diskontinuierlich auf einem Jigger pfropft.

19. Verfahren nach den Ansprüchen 1 bis 17, dadurch gekennzeichnet, daß man als Membran Bahnmaterial kontinuierlich pfropft.

20. Verfahren nach Anspruch 19, dadurch gekennzeichnet, daß man das Bahnmaterial mit der Pfropflösung imprägniert und die Pfropfung kontinuierlich in einer Verweilstrecke unter Intergas durchführt.

21. Verfahren nach Anspruch 20, dadurch gekennzeichnet, daß die Verweilzeit des Bahnmaterials in der Verweilstecke 1 bis 30 Minuten, vorzugsweise 3 bis 10 Minuten beträgt.

22. Verfahren nach den Ansprüchen 1 bis 21, dadurch gekennzeichnet, daß man einfach oder mehrfach ethylenisch ungesättigte Monomere oder Gemische davon verwendet.

23. Verfahren nach Anspruch 22, dadurch gekennzeichnet, daß man als einfach ethylenisch ungesättigte Monomere Acrylsäure, Methacrylsäure, deren Ester oder Amide oder hydroxylgruppenhaltige Monomere verwendet, bevorzugt
Methylmethacrylat,
Ethylmethacrylat,
Hydroxyethylmethacrylat,
Methacrylamidoglycolatmethylether,
Glycerinmethacrylat,
Glycidylmethacrylat,
Glycerinacrylat,
Glycidylacrylat
Diethylaminoethylmethacrylat,
Dimethylaminoethylmethacrylat,
Sulfopropylmethacrylat,
N-Morpholinopropylmethacrylamid,
N-Morpholinoethylmethacrylat,
Dimethylaminopropylmethacrylamid,
Vinylpyrrolidon,
N-Hydroxyethylmethacrylamid,
N-Acrylamidoglycolsäure,
N-[tris-(hydroxymethyl)]-methylmethacrylamid,
N-[tris-(hydroxymethyl)]-methylacrylamid,
Methacrylamid,
2-Acrylamido-2-methyl-propansulfonsäure,
Triethylammonium-2-hydroxypropylmethacrylatchlorid,
Methacrylamidopropyltrimethylammoniumchlorid,
Diethylaminoethylmethacrylat,
Diethylenglycolmethacrylat,
Methylacrylat,
Ethylacrylat,
Hydroxyproplymethacrylat,
Hydroxyethylacrylat,
Hydroxypropylacrylat,
Acrylamid,
Vinylacetat,
Octaethylenglycolmethacrylat,
Vinylimidazol,
Methylvinylacetamid,
4-Vinylpyridin,
Acrolein oder
Methacrolein.

24. Verfahren nach Anspruch 22, dadurch gekennzeichnet, daß man als mehrfach ethylenisch ungesättigte Monomere verwendet:
Pentaerythritdimethacrylat,
Glycerindimethacrylat,
Glycerindiacrylat,
Glycerintrimethacrylat,
Glycerintriacrylat,
Tetraethylenglycoldimethacrylat,
Tetraethylenglycoldiacrylat,
Trimethylolpropantriacrylat,
Trimethylolpropantrimethacrylat oder
Methylenbisacrylamid.

25. Gepfropfte, als mikroporöse Membran ausgebildete Formkörper, die mit ethylenisch ungesättigtem Monomer gepfropft sind,
**dadurch gekennzeichnet,**
daß sie aus einem Formkörper aus einem ersten Polymer bestehen, auf dessen Oberfläche sich eine Beschichtung aus einem zweiten Polymer befindet, auf dem ein drittes Polymer, welches gebildet ist aus mindestens einem ethylenisch ungesättigten Monomer, aufgepfropft ist.

26. Membran nach Anspruch 25, dadurch gekennzeichnet, daß es sich bei dem als Mikroporöse Membran ausgebildeten Formkörper des ersten Polymers um Ultrafiltrations- oder Mikrofiltrationsmembranen handelt, und daß das erste Polymer ausgewählt ist aus der Gruppe
der Cellulosederivate, bevorzugt
Celluloseacetat,
Cellulosehydrat,
Cellulosenitrat oder
Gemischen davon,
der Polysulfone,
der Polyethersulfone, aromatische und aliphatische Polyamide, Polysulfonamide,
der Polyolefine, bevorzugt
Polypropylen,
der halogenierten Polyolefine, bevorzugt,
Polyvinylchlorid,
Polyvinylfluorid,
Polyvinylidenfluorid,
Polytetrafluorethylen,
der Polyester oder
der Homo- oder Copolymere von Acrylnitril.

27. Membran nach den Ansprüchen 25 und 26, dadurch gekennzeichnet, daß das zweite Polymer ein stickstoffhaltiges Polymer ist, das am Stickstoff durch Halogen substituierbare Wasserstoffatome trägt, wobei das stickstoffhaltige Polymere bevorzugt ein aliphatisches oder aromatisches Polyamid, ein Polysulfonamid, ein Polyurethan oder ein Polyharnstoff ist.

28. Membran nach den Ansprüchen 25 bis 27 in Gestalt von Ultrafiltrations- oder Mikrofiltrationsmembranen, dadurch gekennzeichnet, daß der Massenanteil des zweiten Polymers bezogen auf das erste Polymer 0,01 bis 10 %, vorzugsweise 0,1 bis 2 % beträgt.

29. Membran nach den Ansprüchen 25 bis 28, dadurch gekennzeichnet, daß das zweite Polymer vernetzt ist.

30. Membran nach den Ansprüchen 25 bis 29, dadurch gekennzeichnet, daß das dritte Polymer hergestellt ist aus den einfach bzw. mehrfach ethylenisch ungesättigten Monomeren gemäß Anspruch 23 bzw. 24 oder aus Gemischen davon.

31. Membran nach den Ansprüchen 25 bis 30, dadurch gekennzeichnet, daß der Massenanteil des aufgepfropften dritten Polymers bezogen auf das oberflächlich aufgebrachte zweite Polymer 50 bis 5000 % beträgt.

32. Membran nach den Ansprüchen 25 bis 31, dadurch gekennzeichnet, daß das aufgepfropfte dritte Polymer mit Wasser einen Kontaktwinkel von weniger als 90 ° aufweist.

33. Membran nach den Ansprüchen 25 bis 32, dadurch gekennzeichnet, daß dessen Proteinadsorption an der Oberfläche 0,1 bis 50 % jenes Wertes beträgt, der vor der Aufbringung des zweiten Polymeren beobachtet wird.

34. Membran nach den Ansprüchen 25 bis 33, erhältlich durch Pfropfen einer mit dem zweiten Polymer beschichteten mikroporösen Membran mit Gycidylmethacrylat, gefolgt von wahlweise
a) Sulfonieren der Epoxidgruppe des aufgepfropften Glycidylmethacrylats durch Umsetzen mit Sulfitionen,
b) Quarternisieren durch Umsetzen der Epoxidgruppe mit einem tertiären Amin oder
c) Einführen einer tertiären Aminogruppe durch Umsetzen der Epoxidgruppe mit einem sekundären Amin.

35. Verwendung gepfropfter Membranen gemäß den vorhergehenden Ansprüchen für die adsorptive Stofftrennung.

## Claims

1. A method for modifying the surface of formed bodies in the form of microporous membranes in which the formed bodies are grafted with ethylenically unsaturated monomers,
characterized in that
a) A layer of a second polymer is formed on the surface of a formed body consisting of a first polymer and subsequently
b) A third polymer is formed on the layer of the second polymer by grafting at least one ethylenically unsaturated monomer on the layer of the second polymer, wherein a grafting on the formed body of the first polymer due to its chemical composition can not occur without application of the layer of the second polymer wherein a grafting on the formed body of the first polymer due to its chemical composition can ocur without application of the layer of the second polymer.

2. The method according to claim 1, characterized in that in order to form the layer of the second polymer, low-molecular precursors of the second polymer are brought to reaction on the surface of the membrane.

3. The method according to claim 1 or 2, characterized in that the formation of the layer is carried out by applying a solution of the second polymer or of the low-molecular precursors onto the surface of the membrane and by subsequent evaporation of the solvent.

4. The method according to claim 3, using low-molecular precursors of the second polymer, characterized in that a catalyst is added to the solution which initiates the reaction of the low-molecular precursors to the second polymer.

5. The method according to claim 1 or 2, characterized in that the formation of the layer is carried out by adsorption of the polymer or of its low-molecular precursors out of a solution.

6. The method according to claim 2, characterized in that the low-molecular precursors are applied onto the layer of the first polymer out of the gaseous phase and are subsequently brought to reaction.

7. The method according to claims 2 to 6, characterized in that the low-molecular precursors are applied in successive fashion onto the surface of the membrane.

8. The method according to claims 1 to 7, characterized in that a second polymer or its low-molecular precursors are used which are capable of a chemical reaction with the surface of the membrane.

9. The method according to claims 1 to 8, characterized in that the second polymer is converted after its application onto the surface of the membrane into an insoluble state by means of cross-linking.

10. The method according to claims 1 to 9, characterized in that a second polymer is used which comprises nitrogen atoms either in the main chain or in the side chain on which atoms hydrogen atoms substitutable by halogens sit, preferably an aromatic or aliphatic polyamide or polysulfonamide, a polyurethane or a polyurea.

11. The method according to claim 10, characterized in that an N-hydroxymethylated or N-methoxymethylated polyamide is used which is thermally cross-linked after the application onto the surface of the first polymer, preferably with an acid or a substance which splits off acid under heat as cross-linking catalyst.

12. The method according to claim 10, charactcrized in that a polyurethane with a diol component built up on an ester base or preferably ether base is used, that either the diol component and the diisocyanate component of the polyurethane are preferably applied in common out of a solution and subsequently brought to reaction, or at first the diol component is applied out of a solution of the diol and subsequently the diisocyanate component out of the gaseous phase and that the two components are brought to reaction on the surface of the membrane.

13. The method according to claim 10, characterized in that the urea is formed on the surface of the formed body by means of a reaction between a diisocyanate and a diamine and that the diisocyanate and the diamine are preferably applied in succession via the gaseous phase onto the surface of the membrane.

14. The method according to claims 1 to 13, characterized in that the grafting of the at least one ethylenically unsaturated monomer is carried out in such a manner that in a first stage the hydrogen sitting on the nitrogen of the second polymer is substituted by a halogen, preferably chlorine or bromine, and is subsequently caused to react in the presence of a reducing agent with at least one ethylenically unsaturated monomer.

15. The method according to claims 1 to 9, characterized in that an N-halogenated polymer is used as second polymer in which the halogen has the oxidation number +1 and the grafting takes place by means of the action of a reducing agent and of the at least one ethylenically unsaturated monomer.

16. The method according to claims 1 to 13, characterized in that the grafting of the at least one ethylenically unsaturated monomer is carried out in the presence of an organic halogen compound, preferably carbon tetrachloride or trichloroacetic acid, and of a reducing agent.

17. The method according to claims 1 to 16, characterized in that the formed bodies consisting of the first polymer are microporous membranes in the shape of ultrafiltration or microfiltration membranes.

18. The method according to claims 1 to 17, characterized in that as a membrane web material is discontinuously grafted on a jigger.

19. The method according to claim 17, characterized in that as a membrane web material is continuously grafted.

20. The method according to claim 19, characterized in that the web material is impregnated with the grafting solution and that the grafting is carried out continuously in a dwell stretch under inert gas.

21. The method according to claim 20, characterized in that the dwell time of the web material in the dwell stretch is 1 to 30 minutes, preferably 3 to 10 minutes.

22. The method according to claims 1 to 21, characterized in that simply or multiply ethylenically unsaturated monomers or mixtures thereof are used.

23. The method according to claim 22, characterized in that acrylic acid, methacrylic acid, their esters or amides or monomers containing hydroxyl groups are used as simply ethylenically unsaturated monomers, preferably
Methylmethacrylate,
Ethylmethacrylate,
Hydroxyethylmethacrylate,
Methacrylamidoglycolate methylether,
Glycerol methacrylate,
Glycidyl methacrylate,
Glycerol acrylate,
Glycidyl acrylate,
Diethylaminoethylmethacrylate,
Dimethylaminoethylmethacrylate,
Sulfopropylmethacrylate,
N-morpholinopropylmethacrylamide,
N-morpholinoethylmethacrylate,
Dimethylaminopropylmethacrylamide,
Vinyl pyrrolidone,
N-hydroxyethylmethacrylamide,
N-acrylamidoglycolic acid,
N-[tris-(hydroxymethyl)]-methylmethacrylamide,
N-[tris-(hydroxymethyl)]-methylacrylamide,
Methacrylamide,
2-acrylamido-2-methyl-propane sulfonic acid,
Triethylammonium-2-hydroxypropylmethacrylate chloride,
Methacrylamidopropyltrimethylammonium chloride,
Diethylaminoethylmethacrylate,
Diethylene glycol methacrylate,
Methacrylate,
Ethylacrylate,
Hydroxypropylmethacrylate,
Hydroxyethylacrylate,
Hydroxypropylacrylate,
Acrylamide,
Vinyl acetate,
Octaethylene glycol methacrylate,
Vinyl imidazol,
Methylvinyl acetamide,
4-vinyl pyridine
Acrolein or
Methacrolein.

24. The method according to claim 22, characterized in that the following are used as multiply ethylenically unsaturated monomers:
Pentaerythrite dimethacrylate,
Glycerol dimethacrylate,
Glycerol diacrylate,
Glycerol trimethacrylate,
Glycerol triacrylate,
Tetraethylene glycol dimethacrylate,
Tetraethylene glycol diacrylate,
Trimethylal propane triacrylate,
Trimethyylol propane trimethacrylate or
Methylene bisacrylamide.

25. Grafted formed bodies in the form of microporous membranes which are grafted with ethylenically unsaturated monomers characterized in that they consist of a formed body of a first polymer on whose surface a coating of a second polymer is located on which a third polymer formed of at least one ethylenically unsaturated monomer is grafted.

26. The membrane according to claim 25, characterized in that the formed body in the form of a membrane of the first polymer is an ultrafiltration or microfiltration membrane and that the first polymer is selected from the group of
Cellulose derivatives, preferably
Cellulose acetate,
Cellulose hydrate,
Cellulose nitrate or
Mixtures thereof,
Polysulfones,
Polyether sulfones,
Aromatic and aliphatic polyamides
Polysulfonamides
Polyolefines, preferably
Polypropylene,
Halogenated polyolefines, preferably
Polyvinyl chloride,
Polyvinyl fluoride,
Polyvinylidene fluoride,
Polytetrafluoroethylene,
Polyesters or
Homo- or copolymers of acrylonitrile.

27. The membrane according to claims 25 and 26, characterized in that the second polymer is a nitrogen containing polymer which carries hydrogen atoms substitutable on the nitrogen by halogen and that the nitrogen-containing polymer is preferably an aliphatic or aromatic polyamide, a polysulfonamide, a polyurethane or a polyurea.

28. The membrane according to claims 25 to 28 in the form of ultrafiltration or microfiltration membranes, characterized in that the massive portion of the second polymer relative to the first polmer is 0.01 to 10 %, preferably 0.1 to 2 %.

29. The membrane according to claims 25 to 28, characterized in that the second polymer is cross-linked.

30. The membrane according to claims 25 to 29, characterized in that the third polymer is produced from the simply or multiply ethylenically unsaturated monomers according to claim 23 or 24 or from mixtures of them.

31. The membrane according to claims 25 to 30, characterized in that the massive portion of the grafted-on third polymer relative to the superficially applied second polymer is 50 to 5000 %.

32. The membrane according to claims 25 to 31, characterized in that the grafted-on third polymer exhibits a contact angle of less than 90° with water.

33. The membrane according to clains 25 to 32, characterized in that their protein adsorption of the surface is 0.1 to 50 of the value which is observed before the application of the second polymer.

34. The membrane according to claims 25 to 33, obtainable by means of grafting a fabric, fleece or microporous membrane coated with the second polymer with glycidyl methacrylate, followed selectively by
a ) Sulfonation of the epoxide group of the grafted-on glycidyl methacrylate by means of conversion with sulfite ions,
b) Quaternization by means of converting the epoxide group with a tertiary amine or
c ) Introduction of a tertiary amino group by means of conversion of the epoxide group with a secondary amine.

35. The use of grafted membranes according to the preceding claims for adsorptive mass separation.

## Revendications

1. Procédé pour modifier la surface de corps moulés en forme de membrane microporeuse, dans lequel on greffe les corps moulés avec des monomères éthyléniquement insaturés,
caractérisé en ce que
a) sur la surface d'un corps moulé constitué d'un premier polymère, on forme une couche constituée d'un deuxième polymère et ensuite,
b) on forme un troisième polymère sur la couche constituée du deuxième polymère en greffant au moins un monomère éthyléniquement insaturé sur la couche constituée du deuxième polymère,
un greffage sur le corps moulé constitué du premier polymère ne pouvant pas avoir lieu, en raison de la structure chimique de celui-ci, sans application de la couche constituée du deuxième polymère.

2. Procédé selon la revendication 1, caractérisé en ce que, pour former la couche constituée du deuxième polymère, on fait réagir des précurseurs de faible poids moléculaire du deuxième polymère sur la surface de la membrane.

3. Procédé selon la revendication 1 ou 2, caractérisé en ce qu'on effectue la formation de la couche par application d'une solution du deuxième polymère ou des précurseurs de faible poids moléculaire sur la surface de la membrane, suivie d'une évaporation du solvant.

4. Procédé selon la revendication 3 avec utilisation de précurseurs de faible poids moléculaire du deuxième polymère, caractérisé en ce qu'on ajoute, à la solution, un catalyseur qui déclenche la réaction des précurseurs de faible poids moléculaire pour donner le deuxième polymère.

5. Procédé selon la revendication 1 ou 2, caractérisé en ce qu'on effectue la formation de la couche par adsorption du polymère ou de ses précurseurs de faible poids moléculaire en solution.

6. Procédé selon la revendication 2, caractérisé en ce qu'on applique les précurseurs de faible poids moléculaire sur la couche constituée du premier polymère en phase gazeuse et ensuite, on les fait réagir.

7. Procédé selon les revendications 2 à 6, caractérisé en ce qu'on applique successivement les précurseurs de faible poids moléculaire sur la surface de la membrane.

8. Procédé selon les revendications 1 à 7, caractérisé en ce qu'on utilise un deuxième polymère ou des précurseurs de faible poids moléculaire de celui-ci qui sont capables de réagir chimiquement avec la surface de la membrane.

9. Procédé selon les revendications 1 à 8, caractérisé en ce qu'on rend le deuxième polymère insoluble par réticulation après son application sur la surface de la membrane.

10. Procédé selon les revendications 1 à 9, caractérisé en ce qu'on utilise un deuxième polymère qui contient des atomes d'azote dans la chaîne principale ou dans la chaîne latérale, sur lesquels sont situés des atomes d'hydrogène pouvant être substitués par des halogènes, de préférence un polyamide ou un polysulfonamide aromatique ou aliphatique, un polyuréthanne ou une polyurée.

11. Procédé selon la revendication 10, caractérisé en ce qu'on utilise un polyamide N-hydroxyméthylé ou N-méthoxyméthylé qu'on réticule par voie thermique après son application sur la surface du premier polymère, de préférence avec un acide ou avec une substance séparant un acide sous l'effet de la chaleur, comme catalyseur de réticulation.

12. Procédé selon la revendication 10, caractérisé en ce qu'on utilise un polyuréthanne avec un composant diol à base d'ester ou, de préférence, à base d'éther, dans lequel, de préférence, on applique le composant diol et le composant diisocyanate du polyuréthanne ensemble en solution et ensuite, on les fait réagir, ou on applique d'abord le composant diol à partir d'une solution du diol et ensuite le composant diisocyanate en phase gazeuse et on fait réagir ces deux composants sur la surface de la membrane.

13. Procédé selon la revendication 10, caractérisé en ce qu'on forme l'urée sur la surface du corps moulé par réaction entre un diisocyanate et une diamine, de préférence en appliquant successivement le diisocyanate et la diamine en phase gazeuse sur la surface de la membrane.

14. Procédé selon les revendications 1 à 13, caractérisé en ce qu'on effectue le greffage du monomère minimal éthyléniquement insaturé de telle façon que, lors d'une première étape, on substitue l'atome d'hydrogène situé sur l'atome d'azote du deuxième polymère par un halogène, de préférence le chlore ou le brome, et ensuite, on le fait réagir avec au moins un monomère éthyléniquement insaturé en présence d'un agent réducteur.

15. Procédé selon les revendications 1 à 9, caractérisé en ce qu'on utilise, comme deuxième polymère, un polymère N-halogéné dans lequel l'halogène présente le degré d'oxydation +1, et on effectue le greffage sous l'effet d'un agent réducteur et du monomère minimal éthyléniquement insaturé.

16. Procédé selon les revendications 1 à 13, caractérisé en ce qu'on effectue le greffage du monomère minimal éthyléniquement insaturé en présence d'un composé halogéné organique, de préférence du tétrachlorure de carbone ou de l'acide trichloroacétique, et d'un agent réducteur.

17. Procédé selon les revendications 1 à 16, caractérisé en ce que les corps moulés formés du premier polymère représentent des membranes microporeuses en forme de membranes d'ultrafiltration ou de microfiltration.

18. Procédé selon les revendications 1 à 17, caractérisé en ce qu'on greffe, comme membrane, un matériau en bande, de façon discontinue, dans un appareil Jigger.

19. Procédé selon les revendications 1 à 17, caractérisé en ce qu'on greffe, comme membrane, un matériau en bande, en continu.

20. Procédé selon la revendication 19, caractérisé en ce qu'on imprègne le matériau en bande avec la solution de greffage et on effectue le greffage en continu sur un banc d'étirage de séjour dans une atmosphère de gaz inerte.

21. Procédé selon la revendication 20, caractérisé en ce que le temps de séjour du matériau en bande sur le banc d'étirage est de 1 à 30 minutes, de préférence de 3 à 10 minutes.

22. Procédé selon les revendications 1 à 21, caractérisé en ce qu'on utilise des monomères éthyléniquement mono-insaturés ou polyinsaturés ou des mélanges de ceux-ci.

23. Procédé selon la revendication 22, caractérisé en ce qu'on utilise, comme monomères éthyléniquement mono-insaturés, l'acide acrylique, l'acide méthacrylique, les esters ou les amides de ceux-ci, ou des monomères contenant des groupes hydroxyles, de préférence le méthacrylate de méthyle, le méthacrylate d'éthyle, le méthacrylate d'hydroxyéthyle, l'éther méthylique de méthacrylamidoglycolate, le méthacrylate de glycérol, le méthacrylate de glycidyle, l'acrylate de glycérol, l'acrylate de glycidyle, le méthacrylate de diéthylaminoéthyle, le méthacrylate de diméthylaminoéthyle, le méthacrylate de sulfopropyle, le N-morpholinopropylméthacrylamide, le méthacrylate de N-morpholinoéthyle, le diméthylaminopropylméthacrylamide, la vinylpyrrolidone, le N-hydroxyéthylméthacrylamide, l'acide N-acrylamidoglycolique, le N-[tris- (hydroxyméthyl)]-méthylméthacrylamide, le N-[tris- (hydroxyméthyl)]-méthylacrylamide, le méthacrylamide, l'acide 2-acrylamido-2-méthylpropanesulfonique, le chlorure de méthacrylate de triéthylammonium-2-hydroxypropyle, le chlorure de méthacrylamidopropyltriméthylammonium, le méthacrylate de diéthylaminoéthyle, le méthacrylate de diéthylèneglycol, l'acrylate de méthyle, l'acrylate d'éthyle, le méthacrylate d'hydroxypropyle, l'acrylate d'hydroxyéthyle, l'acrylate d'hydroxypropyle, l'acrylamide, l'acétate de vinyle, le méthacrylate d'octaéthylèneglycol, le vinylimidazole, le méthylvinylacétamide, la 4-vinylpyrridine, l'acroléine ou la méthacroléine.

24. Procédé selon la revendication 22, caractérisé en ce qu'on utilise, comme monomères éthyléniquement polyinsaturés, le diméthacrylate de pentaérythritol, le diméthacrylate de glycérol, le diacrylate de glycérol, le triméthacrylate de glycérol, le triacrylate de glycérol, le diméthacrylate de tétraéthylèneglycol, le diacrylate de tétraéthylèneglycol, le triacrylate de triméthylolpropane, le triméthacrylate de triméthylolpropane ou le méthylènebisacrylamide.

25. Corps moulés en forme de membrane microporeuse, qui sont greffés avec un monomère éthyléniquement insaturé, caractérisés en ce qu'ils sont formés d'un corps moulé constitué d'un premier polymère dont la surface comporte un revêtement constitué d'un deuxième polymère sur lequel est greffé un troisième polymère qui est formé à partir d'au moins un monomère éthyléniquement insaturé.

26. Membrane selon la revendication 25, caractérisée en ce que le corps moulé en forme de membrane microporeuse, formé du premier polymère, est une membrane d'ultrafiltration ou une membrane de microfiltration, et en ce que le premier polymère est choisi dans l'ensemble constitué par les dérivés cellulosiques, de préférence l'acétate de cellulose, l'hydrate de cellulose, le nitrate de cellulose, ou des mélanges de ceux-ci, les polysulfones, les polyéthersulfones, les polyamides aromatiques ou aliphatiques, les polysulfonamides, les polyoléfines, de préférence le polypropylène, les polyoléfines halogénées, de préférence le chlorure de polyvinyle, le fluorure de polyvinyle, le fluorure de polyvinylidène, le polytétrafluoroéthylène, les polyesters ou les homopolymères ou les copolymères d'acrylonitrile.

27. Membrane selon les revendications 25 et 26, caractérisée en ce que le deuxième polymère est un polymère azoté qui porte des atomes d'hydrogène pouvant être substitués par un halogène sur l'atome d'azote, le polymère azoté étant, de préférence, un polyamide aliphatique ou aromatique, un polysulfonamide, un polyuréthanne ou une polyurée.

28. Membrane selon les revendications 25 à 27 en forme de membranes d'ultrafiltration ou de microfiltration, caractérisée en ce que la proportion en poids du deuxième polymère est de 0,01 à 10 %, de préférence de 0,1 à 2 %, par rapport au premier polymère.

29. Membrane selon les revendications 25 à 28, caractérisée en ce que le deuxième polymère est réticulé.

30. Membrane selon les revendications 25 à 29, caractérisée en ce qu'on prépare le troisième polymère à partir des monomères éthyléniquement mono-insaturés et des monomères éthyléniquement polyinsaturés respectivement selon les revendications 23 et 24 ou à partir de mélanges de ceux-ci.

31. Membrane selon les revendications 25 à 30, caractérisée en ce que la proportion en poids du troisième polymère greffé est de 50 à 5000 % par rapport au deuxième polymère appliqué en surface.

32. Membrane selon les revendications 25 à 31, caractérisée en ce que le troisième polymère greffé présente un angle de contact avec l'eau inférieur à 90°.

33. Membrane selon les revendications 25 à 32, caractérisée en ce que son adsorption de protéines en surface vaut de 0,1 à 50 % la valeur de son adsorption qu'on observe avant l'application du deuxième polymère.

34. Membrane selon les revendications 25 à 33, qu'on obtient par greffage d'une membrane microporeuse revêtue du deuxième polymère avec du méthacrylate de glycidyle, suivi au choix :
a) d'une sulfonation du groupe époxy du méthacrylate de glycidyle greffé par réaction avec des ions sulfite,
b) d'une quaternisation par réaction du groupe époxy avec une amine tertiaire, ou
c) de l'introduction d'un groupe amino tertiaire par réaction du groupe époxy avec une amine secondaire.

35. Utilisation de membranes greffées selon les revendications précédentes pour la séparation de substances par adsorption.
